# EUROPEAN PATENT APPLICATION

(11) **EP 3 416 281 A1**
(43) Date of publication of application: **19.12.2018**
(21) Application number: 18177399.5
(22) Date of filing: 12.06.2018
(51) Int. Cl.: H02P 27/08

(54) **INVERTER APPARATUS, AIR CONDITIONER, METHOD OF CONTROLLING INVERTER APPARATUS, AND PROGRAM**

(30) Priority: 15.06.2017 JP 2017117740
(71) Applicant: MITSUBISHI HEAVY INDUSTRIES THERMAL SYSTEMS, LTD., Tokyo 108-8215 (JP)
(72) Inventor: KOMIYA, Shinichi, Tokyo, 108-8215 (JP); SHIMIZU, Kenji, Tokyo, 108-8215 (JP); SUMITO, Kiyotaka, Tokyo, 108-8215 (JP); WATANABE, Takamasa, Tokyo, 108-8215 (JP); SUNOHARA, Tetsu, Tokyo, 108-8215 (JP)
(74) Representative: Henkel, Breuer & Partner

(57) **Abstract**

An inverter apparatus (101) capable of driving a motor (80) by V/f control provided, including an inverter main circuit (20) including a switching element group and configured to convert a DC voltage into a 3-phase AC voltage, a voltage command unit (12) configured to generate a voltage command on the basis of a speed command of the motor (80), and a selection unit (119) configured to select one of a first command in which a stop command for stopping a PWM-controlled pulse signal is added to the generated voltage command in a mask period which is at least a part of a zero voltage range of the voltage command and a second command including the voltage command without including the stop command, as a selection command, and to issue the selection command to the inverter main circuit, wherein control to switch the switching element group is performed on the basis of the selection command.

## Description

### BACKGROUND OF THE INVENTION

### Field of the Invention

The present invention relates to an inverter apparatus, an air conditioner, a method of controlling the inverter apparatus, and a program.

### Description of Related Art

In an air conditioner (air conditioning unit), an inverter apparatus which generates a load (motor)-driving AC power for driving a motor of a compressor freely is mainly mounted. A well-known inverter apparatus temporarily converts a 3-phase AC voltage, which is input from a commercial power supply (for example, AC 200 V 3-phase AC power supply), into a DC voltage through a rectifier circuit (converter) and converts the DC power into a desired motor-driving AC power by the inverter apparatus.

As such an inverter apparatus, an apparatus which performs output control by a V/f control method or an apparatus which performs output control by a vector control method is known.

For example, Patent Document 1 discloses an inverter apparatus which generates a command voltage from a detected motor current, as the vector control method.

### [Patent Documents]

[Patent Document 1] Japanese Patent No. 5675567

### SUMMARY OF THE INVENTION

In Patent Document 1, the inverter apparatus stops a PWM signal in the vicinity of a current zero crossing. However, since the inverter apparatus of Patent Document 1 generates a voltage command from the detected motor current, the stop control of the PWM signal is performed after the current zero crossing is detected. Therefore, the stopping of the PWM signal is delayed.

Further, when the PWM signal is stopped, an output voltage of the inverter apparatus which can be output is lowered.

An object of the present invention is to provide an inverter apparatus, an air conditioner, a method of controlling the inverter apparatus, and a program which reduce the delay of PWM signal stop and suppress a decrease in an inverter output voltage.

According to a first aspect, an inverter apparatus capable of driving a 3-phase motor by V/f control is provided, including an inverter main circuit including a switching element group and configured to convert a DC voltage into a 3-phase AC voltage, a voltage command unit configured to generate a voltage command on the basis of a speed command of the 3-phase motor, and a selection unit configured to select one of a first command in which a stop command for stopping a PWM-controlled pulse signal is added to the voltage command in a mask period which is at least a part of a zero voltage range of the voltage command and a second command including the voltage command without including the stop command, as a selection command, and to issue the selection command to the inverter main circuit, wherein control to switch the switching element group is performed on the basis of the selection command.

According to this aspect, in the V/f control, the inverter apparatus issues a command with a first command in which the stop command for stopping the PWM-controlled pulse signal is added to the generated voltage command. That is, since the stop command is added to the generated voltage command, it is possible to stop the PWM-controlled pulse signal at an arbitrary timing. Therefore, the delay of the PWM signal stop is suppressed.

Further, since the second command including the voltage command without including the stop command as well as the first command in which the stop command is added to the generated voltage command can be selected, it is possible to suppress a decrease in an inverter output voltage due to the first command.

According to the inverter apparatus of a second aspect, in the first aspect, the switching element group may include a pair of switching elements of an upper arm and a lower arm in association with each phase of the 3-phase AC voltage, and when at least the first command is selected, control of turning on at least one of the switching element of the upper arm and the switching element of the lower arm over an entire region of a plurality of cycles of a PWM cycle among regions in which each phase voltage of the 3-phase AC voltage is large may be performed.

According to this aspect, in the inverter device, since at least one of the switching element of the upper arm and the switching element of the lower arm is turned on (fully-on) over the plurality of PWM cycles in a region in which each phase voltage of the three-phase AC voltage is large, it is possible to reduce switching loss.

Further, according to the inverter apparatus of a third aspect, in the first or second aspect, the selection unit may issue the selection command in association with a current value output to the 3-phase motor and a rotation speed of the 3-phase motor.

According to this aspect, since the inverter apparatus can select the first command and the second command in association with a possibility of step-out, it is possible to suppress the possibility of step-out.

Further, according to the inverter apparatus of a fourth aspect, in any one of the first to third aspects, the inverter apparatus may further include a mask period-changing unit configured to change the mask period.

According to this aspect, since the mask period can be changed when the first command including the stop command is performed, it is possible to suppress a decrease in an inverter output voltage or to suppress vibration.

Further, according to the inverter apparatus of a fifth aspect, in the fourth aspect, the mask period-changing unit may increase the mask period after the second command is switched to the first command.

According to this aspect, it is possible to suppress the vibration when the second command is switched to the first command.

Further, according to the inverter apparatus of a sixth aspect, in the fourth or fifth aspect, the mask period-changing unit may decrease the mask period before the first command is switched to the second command.

According to this aspect, it is possible to suppress the vibration when the first command is switched to the second command.

According to a seventh aspect, an air conditioner is provided including the inverter apparatus of any one of the first to sixth aspects, and the 3-phase motor.

According to an eighth aspect, a method of controlling an inverter apparatus is provided which includes an inverter main circuit including a switching element group and configured to convert a DC voltage to a 3-phase AC voltage and is capable of driving a 3-phase motor by V/f control, the method including a voltage command generation step of generating a voltage command on the basis of a speed command of the 3-phase motor, a selection step of selecting one of a first command in which a stop command for stopping a PWM-controlled pulse signal is added to the voltage command in a mask period which is at least a part of a zero voltage range of the voltage command and a second command including the voltage command without including the stop command, as a selection command, and issuing the selection command to the inverter main circuit, and an inverse conversion step of switching the switching element group on the basis of the selection command and converting the DC voltage into the 3-phase AC voltage.

According to a ninth aspect, a program is provided which causes a computer of an inverter apparatus comprising an inverter main circuit including a switching element group and configured to convert a DC voltage into a 3-phase AC voltage, capable of driving a 3-phase motor by V/f control and configured to perform control to switch the switching element group on the basis of a selection command, to function as a voltage command unit configured to generate a voltage command on the basis of a speed command of the 3-phase motor, and a selection unit configured to select one of a first command in which a stop command for stopping a PWM-controlled pulse signal is added to the voltage command in a mask period which is at least a part of a zero voltage range of the voltage command and a second command including the voltage command without including the stop command, as the selection command, and to issue the selection command to the inverter main circuit.

According to an aspect of the present invention, it is possible to reduce the delay of PWM signal stop and to suppress a decrease in an inverter output voltage.

### BRIEF DESCRIPTION OF THE DRAWINGS

FIG. 1 is an overall view of an inverter apparatus according to a first embodiment of the present invention.
FIG. 2 is a diagram showing a functional configuration of a control device according to a first embodiment of the present invention.
FIG. 3 is a diagram explaining a function of PWM control.
FIG. 4 is a diagram showing a waveform of a corrected AC voltage command according to the first embodiment of the present invention.
FIG. 5 is a diagram showing a relationship between a waveform of a corrected AC voltage command and a gate signal in the first embodiment according to the present invention.
FIG. 6 is a diagram showing a relationship between a waveform of a current of each phase flowing in a motor and a gate signal in the first embodiment according to the present invention.
FIG. 7 is a diagram showing a relationship between a waveform of a current of each phase flowing in a motor and a gate signal in a reference example.
FIG. 8 is a flowchart of a control method of the control device in the first embodiment according to the present invention.
FIG. 9 is a diagram explaining PWM stop control in the first embodiment according to the present invention.
FIG. 10 is a diagram explaining the PWM stop control in a reference example.
FIG. 11 is an overall view of an inverter apparatus in a second embodiment according to the present invention.
FIG. 12 is an overall view of an inverter apparatus in a third embodiment according to the present invention.
FIG. 13 is a diagram showing a functional configuration of a control device according to the third embodiment of the present invention.
FIG. 14 is a diagram showing a functional configuration of a selection unit according to the third embodiment of the present invention.
FIG. 15 is a flowchart of a control method of the control device in the third embodiment according to the present invention.
FIG. 16 is an explanatory diagram of a gate signal in each control.
FIG. 17 is a comparative diagram of an inverter output voltage in each control combination.
FIG. 18 is an explanatory diagram of an applicable range of the control device according to the third embodiment of the present invention.
FIG. 19 is an overall view of an inverter apparatus according to a fourth embodiment of the present invention.
FIG. 20 is a diagram showing a functional configuration of a selection unit according to the fourth embodiment of the present invention.
FIG. 21 is a flowchart of a control method of a control device in the fourth embodiment according to the present invention.
FIG. 22 is an overall view of an inverter apparatus according to a fifth embodiment of the present invention.
FIG. 23 is a diagram showing a functional configuration of a selection unit according to the fifth embodiment of the present invention.
FIG. 24 is an explanatory diagram of an applicable range of a control device according to the fifth embodiment of the present invention.
FIG. 25 is an overall view of an inverter apparatus according to a sixth embodiment of the present invention.
FIG. 26 is a diagram showing a functional configuration of a selection unit according to the sixth embodiment of the present invention.
FIG. 27 is an explanatory diagram of functions of a control device according to the sixth embodiment of the present invention.
FIG. 28 is a flowchart of a control method of the control device in the sixth embodiment according to the present invention.
FIG. 29 is a flowchart of a control method of the control device in the sixth embodiment according to the present invention.
FIG. 30 is a diagram showing a relationship between a waveform of a corrected AC voltage command and a gate signal in a modified example of the present invention.

### DETAILED DESCRIPTION OF THE INVENTION

Hereinafter, various embodiments of the present invention will be described with reference to the drawings.

### <First embodiment>

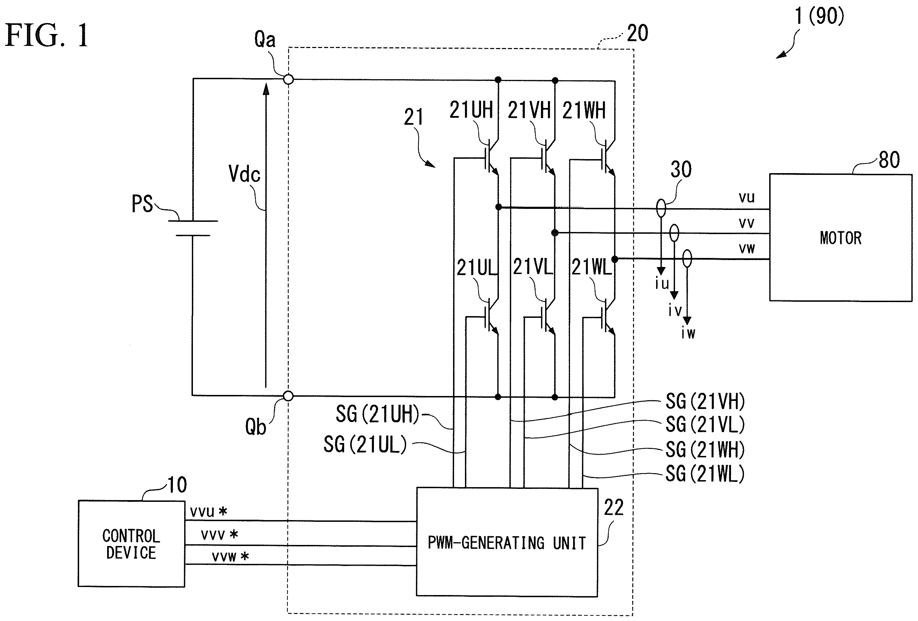

Hereinafter, an inverter apparatus according to the first embodiment will be described in detail with reference to FIGS. 1 to 10.

### (Circuit configuration of inverter apparatus)

FIG. 1 is a diagram showing a circuit configuration of an inverter apparatus 1 according to an embodiment.

The inverter apparatus 1 is mounted in an outdoor unit of an air conditioner (air conditioning unit) 90. The inverter apparatus 1 outputs a load-driving AC voltage (3-phase AC voltage) according to a separately input speed command to a 3-phase motor (motor 80) for driving a compressor of the outdoor unit. The inverter apparatus 1 drives and rotates the 3-phase motor (motor 80), which is a load, at a desired rotation speed on the basis of the load-driving AC voltage.

The inverter apparatus 1 includes a control device 10, an inverter main circuit 20, and a motor current detection unit 30.

The inverter apparatus 1 converts a DC voltage Vdc supplied from a DC power supply PS into a 3-phase AC voltage of a U-phase AC voltage, a V-phase AC voltage and a W-phase AC voltage which are load-driving AC voltages for rotationally driving the motor 80.

The motor current detection unit 30 is provided in each wiring of the 3 phases connected to the motor 80 from the inverter apparatus 1. The motor current detection unit 30 detects each of U-phase, V-phase, and W-phase currents iu, iv, and iw flowing in the motor 80 in association with the 3-phase AC voltage (AC voltages vu, vv, and vw) output from the inverter apparatus 1 to the motor 80 and reports detection results of the respective currents iu, iv, and iw to the control device 10.

### (Inverter main circuit)

The inverter main circuit 20 includes a switching element group 21, a positive electrode DC terminal Qa, a negative electrode DC terminal Qb, and a PWM-generating unit 22.

The positive electrode DC terminal Qa and the negative electrode DC terminal Qb are terminals to which the DC voltage Vdc is input.

The positive electrode DC terminal Qa is connected to the positive electrode of the DC power supply PS. The negative electrode DC terminal Qb is connected to the negative electrode of the DC power supply PS.

The switching element group 21 includes three pairs of two switching elements connected in series between the DC voltage Vdc. Here, the switching element is, for example, a power transistor such as an insulated gate bipolar transistor (IGBT). Each pair of the series-connected switching elements is provided to correspond to each of the 3-phases for rotationally driving the 3-phase motor (motor 80).

As shown in FIG. 1, the switching element group 21 has a pair of switching element 21 UH of an upper arm and switching element 21 UL of a lower arm connected in series from the positive electrode DC terminal Qa, to which the DC voltage Vdc is input, to the negative electrode DC terminal Qb.

Further, the switching element group 21 has a pair of switching element 21 VH of the upper arm and switching element 21 VL of the lower arm connected in series from the positive electrode DC terminal Qa to the negative electrode DC terminal Qb.

Further, the switching element group 21 has a pair of switching element 21 WH of the upper arm and switching element 21 WL of the lower arm connected in series from the positive electrode DC terminal Qa to the negative electrode DC terminal Qb.

The pair of switching element 21 UH of the upper arm and switching element 21 UL of the lower arm is switched by a gate signal of the PWM-generating unit 22 to be described below to generate a U-phase AC voltage vu. The pair of switching element 21 UH of the upper arm and switching element 21 UL of the lower arm is alternately switched in a region excluding a peak voltage region RGP and a zero voltage region RGZ which will be described below.

Similarly, the pair of switching element 21VH of the upper arm and switching element 21 VL of the lower arm is switched by a gate signal of the PWM-generating unit 22 to generate a V-phase AC voltage vv. The pair of switching element 21 VH of the upper arm and switching element 21 VL of the lower arm is alternately switched in a region excluding the peak voltage region RGP and the zero voltage region RGZ which will be described below.

Similarly, the pair of switching element 21 WH of the upper arm and switching element 21 WL of the lower arm is switched by a gate signal of the PWM-generating unit 22 to generate a W-phase AC voltage vw. The pair of switching element 21 WH of the upper arm and switching element 21 WL of the lower arm is alternately switched in a region excluding a peak voltage region RGP and a zero voltage region RGZ which will be described below.

The PWM-generating unit 22 generates a gate signal for driving the switching element group 21 in association with a correction command (to be described below) received from the control device 10 and turns on and off the switching element group 21.

In the present embodiment, the PWM-generating unit 22 acquires corrected AC voltage commands vvu*, vvv*, and vvw* from a correction command unit 18. The PWM-generating unit 22 generates PWM-controlled pulse signals (hereinafter, also referred to as "PWM signals") at an on-duty cycle proportional to the voltages at the respective timings of the respective waveforms of the corrected AC voltage commands vvu*, vvv*, and vvw* thus acquired.

Specifically, the PWM-generating unit 22 outputs a gate signal SG (21UH), a gate signal SG (21UL), a gate signal SG (21VH), a gate signal SG (21VL), a gate signal SG (21WH), and a gate signal SG (21WL) to each gate of the switching element 21UH, the switching element 21UL, the switching element 21VH, the switching element 21VL, the switching element 21WH, and the switching element 21WL to be described below, respectively.

The PWM-generating unit 22 generates the gate signal SG (21UH) and the gate signal SG (21UL) on the basis of the corrected AC voltage command vvu*.

Similarly, the PWM-generating unit 22 generates the gate signal SG (21VH) and the gate signal SG (21VL) on the basis of the corrected AC voltage command vvv*.

Similarly, the PWM-generating unit 22 generates the gate signal SG (21WH) and the gate signal SG (21WL) on the basis of the corrected AC voltage command vvw*.

### (Control device)

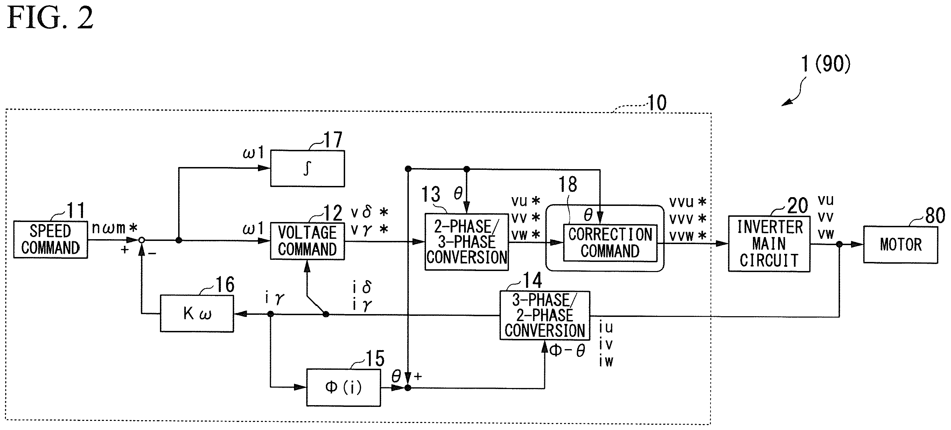

As shown in FIG. 2, the control device 10 functionally includes a speed command unit 11, a voltage command unit 12, a 2-phase/3-phase conversion unit 13, a 3-phase/2-phase conversion unit 14, a power factor angle-setting unit 15, a speed correction unit 16, a phase calculation unit 17, and the correction command unit 18.

In the present embodiment, a computer system is caused to function as the control device 10 by executing a program to be described below.

The speed command unit 11 outputs a speed command nωm* for rotating the motor 80 at a desired rotation speed ω (n is the number of pole pairs of the motor 80). The speed command nωm* is subjected to correction processing by the speed correction unit 16 and becomes a new speed command ω1. The speed command ω1 is input to each of the voltage command unit 12 and the phase calculation unit 17.

The voltage command unit 12 receives an input of an inverter output frequency ω1 which is a new speed command. The voltage command unit 12 generates a voltage command substantially proportional to the inverter output frequency ω1 in two axes (δ-axis and γ-axis) of a rotation orthogonal coordinate system.

In the present embodiment, the speed command unit 11 generates and outputs a δ-axis voltage command vδ* and a γ-axis voltage command vγ* as the voltage commands.

The 2-phase/3-phase conversion unit 13 performs coordinate conversion of the voltage commands output from the voltage command unit 12 into AC voltage commands vu*, vv*, and vw* corresponding to each of the 3-phase AC voltages output from the inverter main circuit 20. The 2-phase/3-phase conversion unit 13 performs the coordinate conversion according to a phase θ obtained from the phase calculation unit 17 to be described below.

The 3-phase/2-phase conversion unit 14 acquires the currents iu, iv, and iw detected by the motor current detection unit 30. The 3-phase/2-phase conversion unit 14 performs the coordinate conversion of the acquired currents iu, iv, and iw into a δ-axis current component iδ (excitation current component) and a γ-axis current component iγ (torque current component) which are current components of the two axes (δ axis and γ axis) forming a motor current I. The converted δ-axis current component iδ and γ-axis current component iγ are fed back to the voltage command unit 12.

The power factor angle-setting unit 15 sets a phase difference φ and is used for adjustment of a power factor. In the present embodiment, the adjustment of the power factor is performed by calculating the phase difference φ in association with the γ-axis current component iγ. When it is not necessary to adjust the power factor with respect to the phase θ which is a phase of a motor application voltage (AC voltages vu, vv, and vw) of the motor 80 by the calculated phase difference φ, the power factor angle-setting unit 15 may not be provided.

The speed correction unit 16 multiplies the γ-axis current component iγ by a gain Kω. The γ-axis current component iγ multiplied by the gain Kω is negatively fed back to the speed command nωm* and is used for correction of the speed command nωm* so that the motor 80 stably operates. When it is not necessary to stabilize the motor 80, the speed correction unit 16 may not be provided.

The phase calculation unit 17 integrates an inverter output frequency ω1, calculates a phase θ and outputs the phase θ to each of the 2-phase/3-phase conversion unit 13 and the correction command unit 18.

The correction command unit 18 acquires the AC voltage commands vu*, vv*, and vw* from the 2-phase/3-phase conversion unit 13.

As will be described below, the correction command unit 18 generates a correction command in which a command for stopping a PWM signal in the zero voltage region of the AC voltage commands vu*, vv*, and vw* is added to the voltage commands and controls the inverter main circuit 20.

Since the specific description of the control device 10 is described in Japanese Patent No. 4764124, except for the correction command unit 18, a detailed description thereof will be omitted.

Also, when feedback control is not required and open control is performed, the 3-phase/2-phase conversion unit 14, the power factor angle-setting unit 15, and the speed correction unit 16 may be eliminated.

### (Correction command unit)

In the present embodiment, the correction command unit 18 generates the corrected AC voltage commands vvu*, vvv*, and vvw* as the correction command from the AC voltage commands vu*, vv*, and vw*, respectively, and outputs the corrected AC voltage commands to the PWM-generating unit 22.

The corrected AC voltage commands vvu*, vvv*, and vvw* are generated as follows:
The correction command unit 18 acquires voltage waveforms approximate to the respective waveforms of the desired AC voltages vu, vv, and vw, as the AC voltage commands vu*, vv*, and vw*.

The correction command unit 18 corrects the voltage waveforms of the acquired AC voltage commands vu*, vv*, and vw* so that control of a two-arm type to be described below is performed and a PWM pulse is stopped in the zero voltage region of each voltage waveform.

In the present embodiment, the correction command unit 18 corrects the voltage waveforms of the AC voltage commands vu*, vv*, and vw* to a waveform J2 to be described below as the corrected AC voltage commands vvu*, vvv*, and vvw*.

### (Two-arm type control)

First, the two-arm type control in the present embodiment will be described.

When the AC voltage commands vu*, vv*, and vw* generated from the voltage commands (δ-axis voltage command vδ* and γ-axis voltage command vγ*) and the phase θ are all sine waves, if the inverter apparatus 1 performs PWM control in a state of the sine wave as it is, a switching loss in the switching element group 21 is large.

In order to suppress the switching loss in the switching element group 21, control (two-arm type control) of turning on each of the switching elements over all the regions of plural cycles of a PWM cycle is performed.

That is, as the two-arm type control, the inverter apparatus 1 performs the control of turning on (fully-on) each of the switching elements 21UH, 21VH, and 21WH of the upper arm, and the switching elements 21UL, 21VL, and 21WL of the lower arm over all the regions of the plural cycles of the PWM cycle, in the region in which (an absolute value of) each phase voltage of the 3-phase AC voltage is large.

Therefore, the control device 10 corrects the voltage command such that the on-duty cycle of the PWM signal is 100% (fully-on) over a predetermined electrical angle centered on a peak voltage (positive peak voltage and negative peak voltage) of the sine wave with a large switching loss.

In the present embodiment, in order to perform the two-arm type control, the correction command unit 18 raises the voltage over a predetermined electrical angle centered on the peak of each of the voltage waveforms of the AC voltage commands vu*, vv*, and vw* and corrects the voltage waveform so that the duty cycle of the PWM signal becomes 100%. The reason for correcting to such a waveform is as follows:

The PWM-generating unit 22 changes the voltage output from the inverter main circuit 20 by changing a ratio (duty cycle of the PWM signal) of an on-pulse width to a pulse cycle of the signal which turns on and off the switching element group 21.

When a predetermined voltage waveform is output to the inverter main circuit 20, the PWM-generating unit 22 modulates the duty cycle of the PWM signal to be proportional to the voltage at each moment of the voltage waveform to be generated and outputs the predetermined voltage waveform to the switching element group 21.

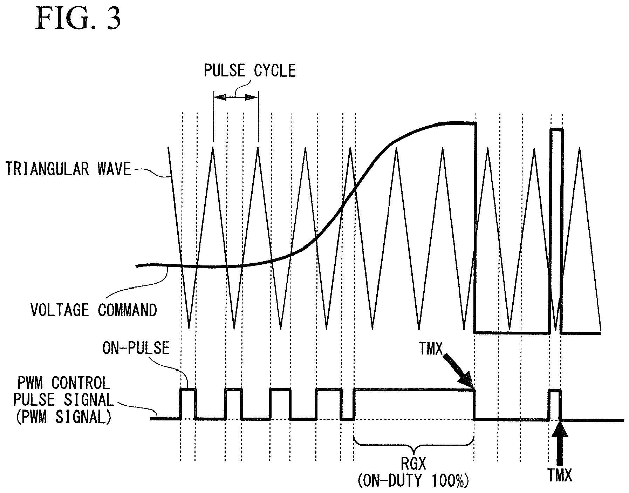

As shown in the example of FIG. 3, in the PWM-generating unit 22, the duty cycle of the PWM signal is determined by comparing the voltage waveform of a triangular wave (or a saw-toothed wave) as a reference with the voltage waveform of the voltage command obtained from the control device 10.

Therefore, if a voltage of the voltage command is modulated, the duty cycle of the PWM signal can be modulated. In FIG. 3, when the voltage of the voltage command is larger than a voltage of the triangular wave, an on-pulse is obtained.

Furthermore, when the voltage of the voltage command is larger than a maximum voltage of the triangular wave over a plurality of pulse cycles, the on-duty cycle of the PWM signal becomes 100% (fully-on), and the on-signal can be obtained in the entire region (region RGX).

In this way, when the voltage of the voltage command is raised so that the voltage of the voltage command becomes larger than the voltage of the triangular wave over the plurality of pulse cycles, the control device 10 can set the on-duty cycle of the PWM signal to 100% (fully-on) in the raised region, and thus the ON signal can be obtained in the entire region.

Therefore, in the present embodiment, the control device 10 corrects each of the voltage waveforms of the AC voltage commands vu*, vv*, and vw* to the voltage waveform raised to a voltage larger than the maximum voltage of the triangular wave and can perform the two-arm type control.

### (Pulse signal stop control)

As described above, in the present embodiment, in order to perform the two-arm type control first, each of the AC voltage commands vu*, vv*, and vw* is corrected to the AC voltage command in which the voltage is raised at an electrical angle (peak voltage region RGP) of 60° centered on the peak voltage of the sine wave.

If the DC voltage Vdc is converted into the AC voltages vu, vv, and vw with the raised AC voltage command as it is, each of line voltages of the AC voltages vu, vv, and vw becomes a distorted waveform as compared to the sine wave. Accordingly, the AC voltage commands vu*, vv*, and vw* need to be further shaped so that the respective line voltages of the AC voltages vu, vv, and vw have a waveform approximate to a sine wave.

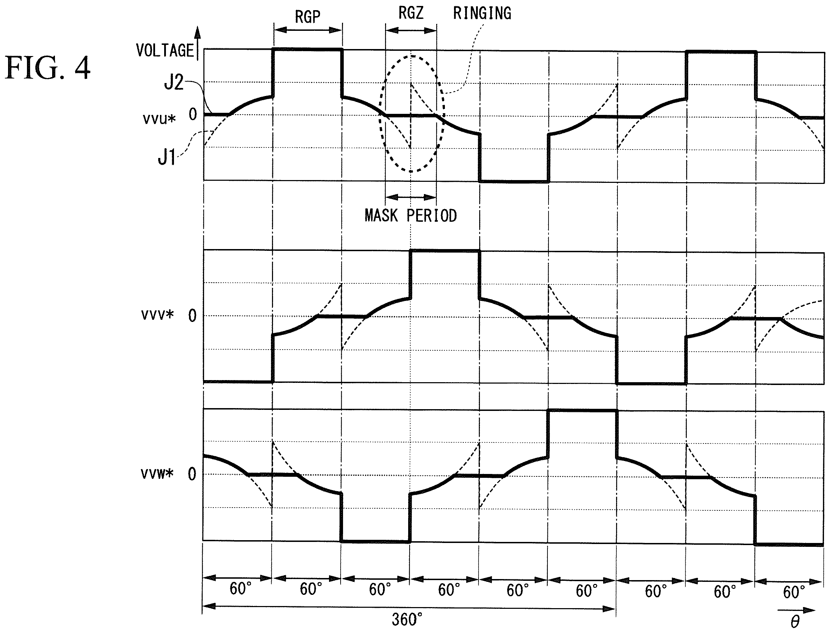

For example, as shown in FIG. 4, a case in which the voltage of the peak voltage region RGP is raised to be a rectangular wave will be described. In FIG. 4, a horizontal axis represents the phase θ and a vertical axis represents the voltage.

In order to set each of the line voltages of the AC voltages vu, vv, and vw to a sine wave, the AC voltage command needs to be shaped into a waveform having ringing in the zero voltage region RGZ as raised compensation. Here, the "zero voltage region RGZ" is a region from the voltage 0 to 0 which includes two peaks and two tails of the ringing.

Specifically, if each of the AC voltage commands vu*, vv*, and vw* is shaped into a waveform J1 indicated by the broken line in FIG. 4, the respective line voltages of the AC voltages vu, vv, and vw can be set to a sine waveform.

However, when the inverter main circuit 20 is driven by the waveform J1 having the ringing in the zero voltage region RGZ, the switching loss of each switching element in the zero voltage region RGZ increases.

Therefore, in the present embodiment, the AC voltage commands vu*, vv*, and vw* are corrected to the waveforms J2 indicated by the solid line in FIG. 4, as the corrected AC voltage commands vvu*, vvv*, and vvw*, respectively. That is, the AC voltage commands vu*, vv*, and vw* are corrected to the waveforms J2 in which the PWM signal can be stopped in the zero voltage region RGZ.

Specifically, the AC voltage commands vu*, vv*, and vw* are corrected to the waveforms J2 having a mask period at which the voltage is set to 0 in the entire zero voltage region RGZ, as the corrected AC voltage commands vvu*, vvv*, and vvw*, respectively.

As described above, the duty cycle of the PWM signal is determined by comparing the voltage waveform of the triangular wave as the reference with the voltage waveform of the voltage command obtained from the control device 10. By setting the voltage of the voltage command waveform to be smaller than a voltage of a minimum value of the voltage waveform of the triangular wave as shown at the timing TMX of FIG. 3, the control device 10 can stop the PWM signal at an arbitrary timing. In the present embodiment, if the voltage of the voltage command to be output to the PWM-generating unit 22 is set to 0, the voltage can be set to a voltage which is at least smaller than the voltage of the minimum value of the voltage waveform of the triangular wave.

Therefore, if each of the AC voltage commands vu*, vv*, and vw* is corrected to the waveform J2, the switching loss in the zero voltage region RGZ is suppressed because the PWM signal stops in the zero voltage region RGZ.

When each of the AC voltage commands vu*, vv*, and vw* is corrected to the waveform J2, the respective line voltages of the AC voltages vu, vv, and vw are slightly distorted from the sine wave, but the respective line voltages are maintained as a waveform approximate to the sine wave.

Therefore, the correction command unit 18 corrects the AC voltage commands vu*, vv*, and vw* to the waveforms J2 as the corrected AC voltage commands vvu*, vvv*, and vvw*.

The corrected AC voltage commands vvu*, vvv*, and vvw* corrected to the waveforms J2 are converted into PWM signals in the PWM-generating unit 22. Further, the PWM-generating unit 22 generates each gate signal in synchronization with the PWM signals.

As an example, a relationship between the corrected AC voltage command vvu* and the gate signal SG (21UH) will be described.

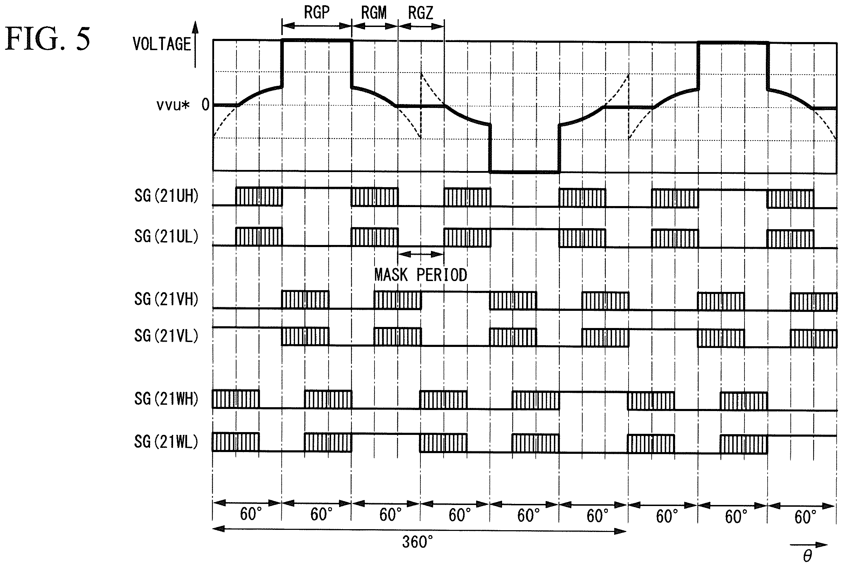

As shown in FIG. 5, the corrected AC voltage command vvu* is converted into the gate signal SG (21UH). In FIG. 5, the horizontal axis represents the phase θ and the vertical axis represents the voltage.

In the peak voltage region RGP, the on-duty cycle of the gate signal SG (21UH) becomes 100% (fully-on), and an ON signal is obtained in the entire region.

Conversely, the gate signal SG (21UL) becomes an OFF signal (PWM pulse stop) in the entire region.

In an intermediate voltage region RGM between the peak voltage region RGP and the zero voltage region RGZ, the gate signal SG (21UH) becomes a pulse train of the on-duty cycle proportional to the voltage of the corrected AC voltage command vvu*.

The gate signal SG (21UL) becomes a pulse train of a reverse pattern of the gate signal SG (21UH). That is, when the gate signal SG (21UH) is the on-pulse, the gate signal SG (21UL) becomes the off-pulse, and when the gate signal SG (21UH) is the off-pulse, the gate signal SG (21UL) becomes the on-pulse.

In the zero voltage region RGZ, the on-duty cycle of the gate signal SG (21UH) becomes 0% (fully-off), and the gate signal SG (21UH) becomes the OFF signal in the entire region. Therefore, in the zero voltage region RGZ, the period (mask period) during which the PWM signal is stopped is obtained.

Similarly to the gate signal SG (21UH), the gate signal SG (21UL) becomes the OFF signal (PWM pulse stop) in the entire region.

As shown in FIG. 5, the gate signal SG (21VH) and the gate signal SG (21VL) have a phase delayed by 120° from the gate signal SG (21UH) and the gate signal SG (21UL), respectively.

As shown in FIG. 5, the gate signal SG (21WH) and the gate signal SG (21WL) have a phase delayed by 240° (phase advanced by 120°) from the gate signal SG (21UH) and the gate signal SG (21UL), respectively.

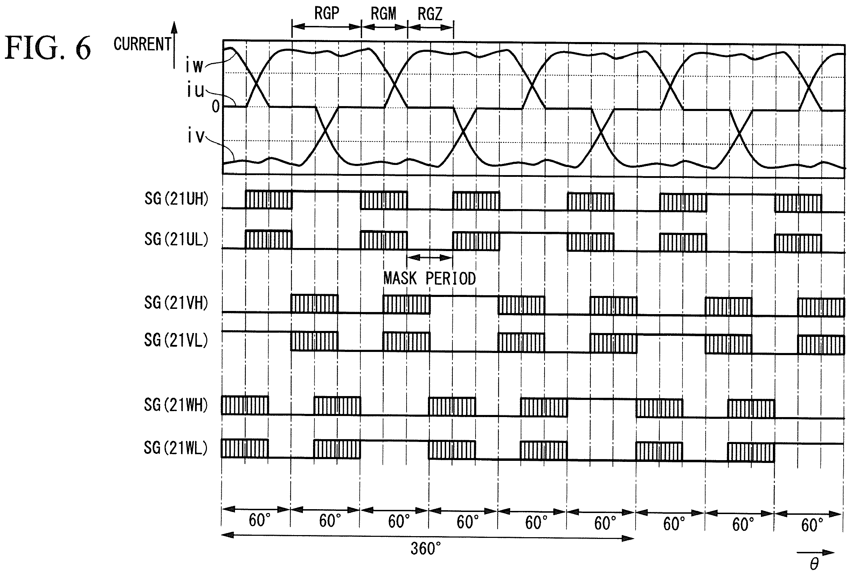

FIG. 6 shows a U-phase current iu, a V-phase current iv, and a W-phase current iw flowing in the motor 80, when controlled by the respective gate signals of FIG. 5.

In the peak voltage region RGP, a large current iu including the maximum flows in the entire region in association with the ON signal of the gate signal SG (21UH).

In the intermediate voltage range RGM, the current iu gradually decreases in association with a decrease in the duty cycle of the gate signal SG (21UH). There is a state in which the current iu does not substantially flow between the intermediate voltage region RGM and the zero voltage region RGZ.

In the zero voltage region RGZ, a state in which the current iu does not substantially flow is maintained in the entire region of the mask period in association with the OFF signal of the gate signal SG (21UH) and the gate signal SG (21UL).

In the V-phase, a similar current iv flows in accordance with the phases of the gate signal SG (21VH) and the gate signal SG (21VL), as shown in FIG. 6.

In the W-phase, a similar current iw flows in accordance with the phases of the gate signal SG (21WH) and the gate signal SG (21WL) as shown in FIG. 6.

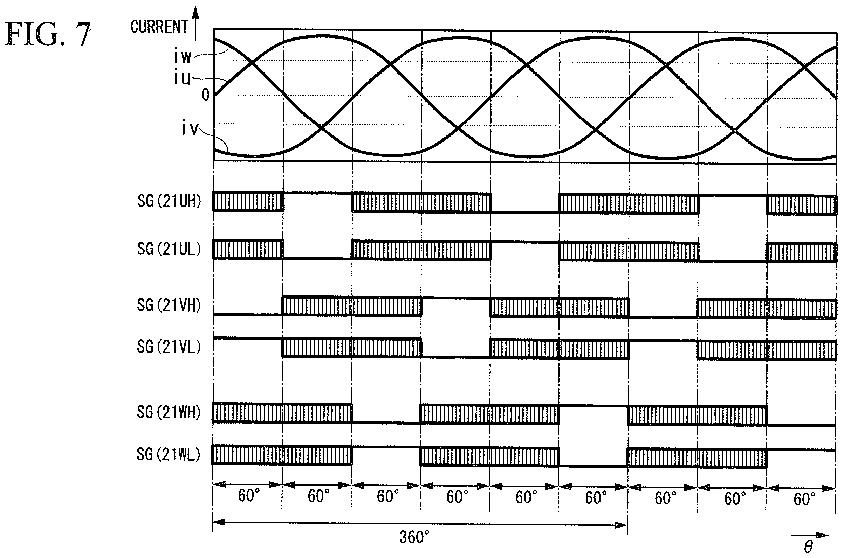

In a reference example, as the corrected AC voltage commands vvu*, vvv*, and vvw*, the U-phase current iu, the V-phase current iv, and the W-phase current iw, respectively, flowing in the motor 80 when the waveforms J1 are input to the PWM-generating unit 22 are shown in FIG. 7.

The currents iu, iv, and iw of the present embodiment shown in FIG. 6 have waveforms slightly distorted from the sine wave as compared with FIG. 7, but they are substantially smooth AC waveforms and can drive the motor 80.

In each of FIG. 6 and FIG. 7, the horizontal axis represents the phase θ, and the vertical axis represents the current.

Hereinafter, the PWM control using the corrected AC voltage commands vvu*, vvv*, and vvw* is also referred to as "partial two-phase energization control."

### (Method of controlling inverter apparatus)

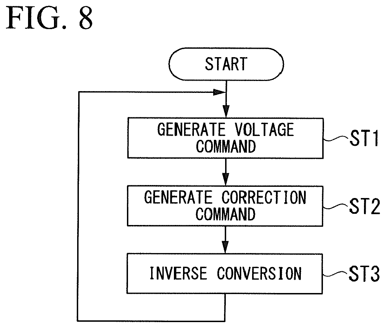

A method of controlling the inverter apparatuses 1 in the present embodiment will be described with reference to FIG. 8.

First, the voltage command unit 12 generates a voltage command using the speed command of the motor 80 (ST1: voltage command generation step).

Subsequently, at a period of at least a part of the zero voltage region of the voltage command, the correction command unit 18 generates a correction command in which a command for stopping the PWM-controlled pulse signal is added to the voltage command (ST2: correction command generation step).

Subsequently, the inverter main circuit 20 switches the switching element group 21 with the pulse signal generated on the basis of the correction command and converts the DC voltage into the 3-phase AC voltage (ST3: inverse conversion step).

Further, as shown in FIG. 8, the process returns to the voltage command generation step ST1 again, and the processes of ST1 to ST3 are repeated in the same way.

When a termination command is input to the inverter apparatus 1 by a user, the repeated processes of ST1 to ST3 are terminated.

The "voltage command generation step ST1" and the "correction command generation step ST2" of the control method according to the present embodiment are performed by the inverter apparatus 1. However, as a modified example, at least one step of the "voltage command generation step ST1" and the "correction command generation step ST2" may be performed by another apparatus or by the user.

### (Action and effect)

Since the inverter apparatus 1 stops the PWM pulse signal in the zero voltage region, the switching loss can be reduced.

Furthermore, as described below, since there is no delay at the time of switching to PWM stop control, the inverter apparatus 1 can suppress a distortion of a waveform of a motor output current.

The inverter apparatus 1 adds the command of stopping the PWM signal to the voltage command and controls the turning-off of the PWM pulse signal.

As described above, since the duty cycle of the PWM signal is determined by comparing the voltage waveform of the triangular wave with the voltage waveform of the voltage command obtained from the control device 10, it is possible to stop the PWM signal at an arbitrary timing.

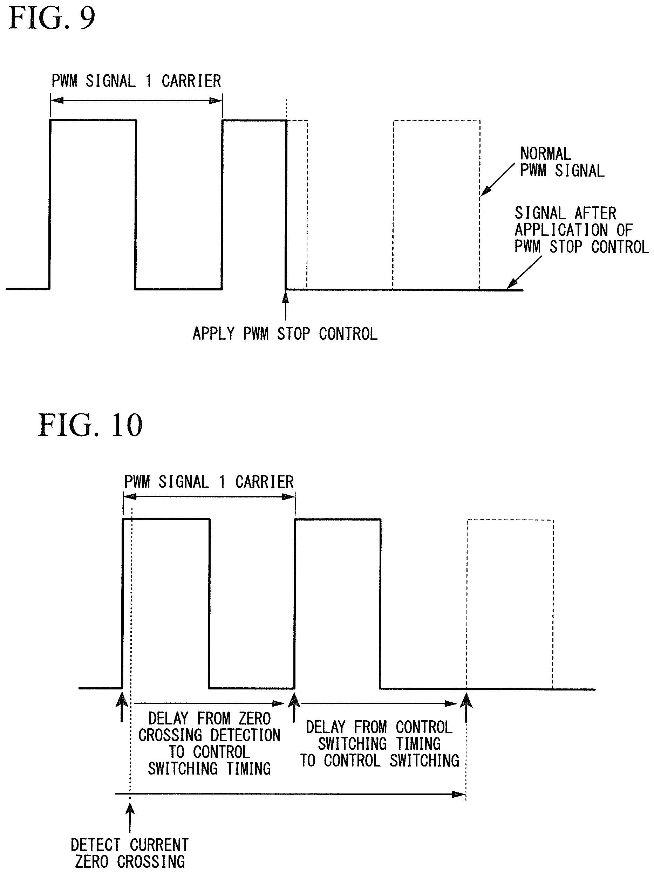

Therefore, as shown in FIG. 9, the PWM signal can be stopped at an arbitrary timing in the PWM pulse signal (carrier signal), and it is possible to perform the switching to the PWM stop control without delay.

Therefore, since there is no delay at the time of switching to the PWM stop control, the inverter apparatus 1 can suppress the distortion of the waveform of the motor output current.

In contrast, the vector control type inverter apparatus as disclosed in Patent Document 1 stops the PWM-controlled pulse signal after the zero crossing of the current is detected. For this reason, as shown in FIG. 10 as a reference example, after the vector control type inverter apparatus detects the zero crossing of the current, the actual switching to the PWM stop control is performed with at least one PWM pulse signal (one carrier) or at most two PWM pulse signals (two carriers) delayed. Therefore, the distortion of the waveform of the motor output current occurs.

In addition, the inverter apparatus 1 can also perform the switching from the control of the zero voltage range RGZ to the control of the intermediate voltage range RGM as well as the switching from the control (which is the switching control) of the intermediate voltage range RGM to the control (which is the PWM stop control) of the zero voltage range RGZ without delay. Likewise, it is also possible to perform the switching from the control of the intermediate voltage range RGM to control (which is fully-on control) of the peak voltage region RGP and the switching from the control of the peak voltage region RGP to the control of the intermediate voltage range RGM without delay.

In addition, since the inverter apparatus 1 turns on (fully on) both the switching element of the upper arm and the switching element of the lower arm over a plurality of PWM cycles in a region in which each phase voltage of the 3-phase AC voltage is large, the switching loss can be reduced.

In addition, since the inverter apparatus 1 generates an output voltage phase from the speed command, the inverter apparatus 1 can stop the PWM-controlled pulse signal with the phase matching the speed command.

### (Modified Example)

In the first embodiment, the correction command unit 18 corrects each of the AC voltage commands vu*, vv*, and vw* to the waveform J2. In this case, the correction command unit 18 may correct each of the AC voltage commands vu*, vv*, and vw* to the waveform J1 and then may correct the waveform J1 to the waveform J2. Alternatively, the correction command unit 18 may correct to the waveform J2 from each of the AC voltage commands vu*, vv*, and vw* in one process.

In the first embodiment, in the correction command unit 18, the respective sine waves of the AC voltage commands vu*, vv*, and vw* are raised in the peak voltage region RGP. As a modified example, in the voltage command unit 12, the voltage commands (the δ-axis voltage command vδ* and the γ-axis voltage command vγ*) may be corrected so that the AC voltage commands vu*, vv*, and vw* are raised in the peak voltage region RGP.

For example, when the γ-axis voltage command vγ* is related to amplitudes of the AC voltage commands vu*, vv*, and vw*, the γ-axis voltage command vγ* is corrected to a large voltage in the voltage command unit 12. When the γ-axis voltage command vγ* is corrected to a large voltage, the respective amplitudes of the AC voltage commands vu*, vv*, and vw* can be increased, and thus the amplitudes can be raised at least in the peak voltage region RGP.

### <Second embodiment>

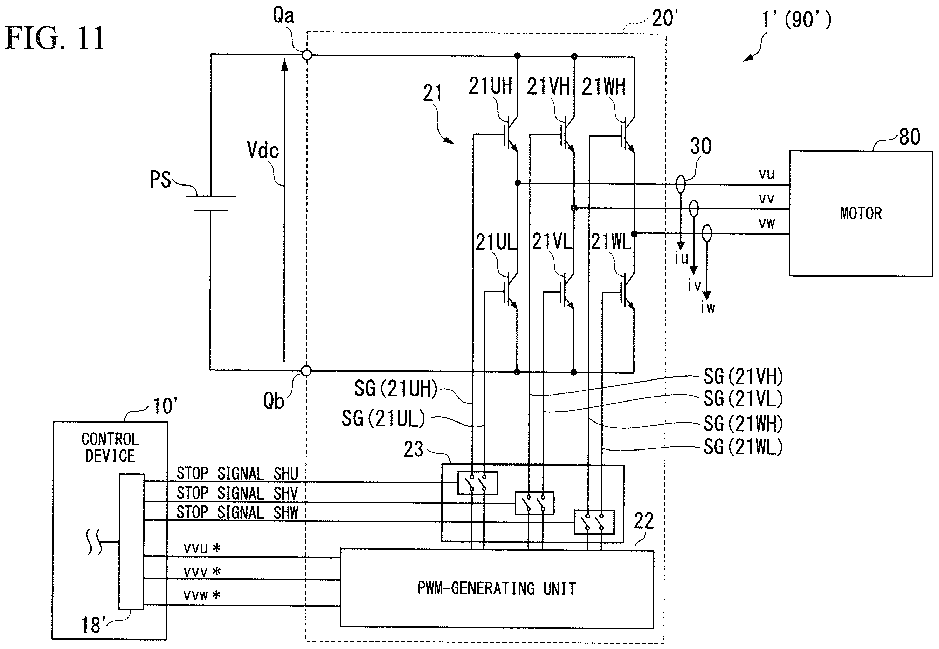

Hereinafter, an inverter apparatus according to a second embodiment will be described in detail with reference to FIG. 11.

The inverter apparatus according to the present embodiment is basically the same as that of the first embodiment, except that a stop signal for stopping the pulse is separately transmitted to the inverter main circuit as a correction command.

An inverter apparatus 1' of the present embodiment is mounted in an outdoor unit of an air conditioner (air conditioning unit) 90'.

As shown in FIG. 11, the inverter apparatus 1' includes a control device 10' having a correction command unit 18', and an inverter main circuit 20' having a pulse stop unit 23.

The correction command unit 18' does not embed a command of stopping the PWM signal but transmits a correction command to the inverter main circuit 20'. That is, the correction command unit 18' separately transmits the corrected AC voltage command and the stop signal for stopping the pulse to the inverter main circuit 20', as the correction commands.

In the present embodiment, the correction command unit 18' transmits the corrected AC voltage commands vvu*, vvv*, and vvw* and the stop signals SHU, SHV, and SHW to the inverter main circuit 20', as the correction commands.

The corrected AC voltage commands vvu*, vvv*, and vvw* are transmitted to the PWM-generating unit 22, and the stop signals SHU, SHV, and SHW are transmitted to the pulse stop unit 23.

The pulse stop unit 23 is provided in the wiring between the PWM-generating unit 22 and each switching element in series with the PWM-generating unit 22 and each switching element. When off-pulses of the stop signals SHU, SHV, and SHW are input, the pulse stop unit 23 stops the PWM signal transmitted from the PWM-generating unit 22 to each switching element.

When the stop signal SHU becomes the off-pulse, the pulse stop unit 23 stops the gate signal SG (21UH) and the gate signal SG (21UL).

When the stop signal SHV becomes the off-pulse, the pulse stop unit 23 stops the gate signal SG (21VH) and the gate signal SG (21VL).

When the stop signal SHW becomes the off-pulse, the pulse stop unit 23 stops the gate signal SG (21WH) and the gate signal SG (21WL).

The respective corrected AC voltage commands vvu*, vvv*, and vvw* can be set to, for example, the waveform J1. In this case, the stop signals SHU, SHV, and SHW are signals having the off-pulse at the timing of the zero voltage region RGZ of the waveform J1.

The PWM-generating unit 22 generates a PWM signal with an on-duty cycle proportional to a voltage at each timing of each waveform (waveform J1) of the corrected AC voltage commands vvu*, vvv*, and vvw*. The PWM-generating unit 22 generates each gate signal in synchronization with the PWM signal. The pulse stop unit 23 stops each gate signal generated at the timing of the zero voltage region RGZ.

As a result, a gate signal similar to that of the first embodiment is supplied to each switching element.

Hereinafter, the PWM control using the corrected AC voltage commands vvu*, vvv*, and vvw* and the stop signals SHU, SHV, and SHW is also referred to as "partial two-phase energization control."

The control method of the inverter apparatus 1' in the present embodiment is the same as the control method of the inverter apparatus in FIG. 8.

Even in the present embodiment, the inverter apparatus 1' can stop the PWM signal at an arbitrary timing in the pulse signal (carrier signal) of the PWM and can perform the switching to the PWM stop control without delay.

Even in the second embodiment, as a modified example, in the voltage command unit, the voltage commands (the δ-axis voltage command vδ* and the γ-axis voltage command vγ*) may be corrected so that the AC voltage commands vu*, vv*, and vw* are raised in the peak voltage region RGP.

### <Third embodiment>

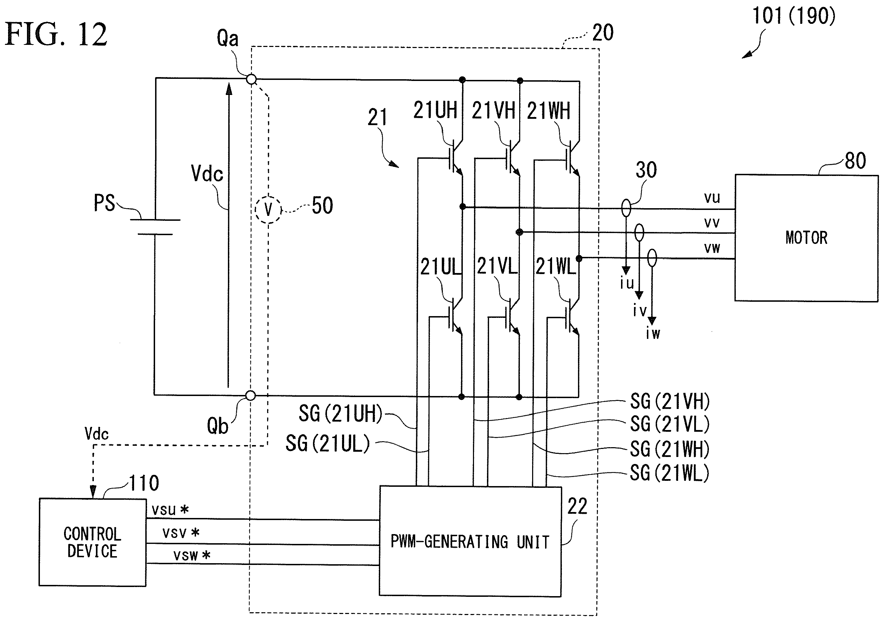

Hereinafter, an inverter apparatus according to a third embodiment will be described in detail with reference to FIGS. 12 to 18.

The inverter apparatus according to the present embodiment is basically the same as that of the first embodiment, except that a selection unit which selects one of a first command for performing partial two-phase energization control and a second command for performing two-arm control (or three-arm control) as a selection command is included.

### (Circuit configuration of inverter apparatus 101)

FIG. 12 is a diagram showing a circuit configuration of an inverter apparatus 101 according to the present embodiment.

The inverter apparatus 101 is mounted in an outdoor unit of an air conditioner (air conditioning unit) 190.

The inverter apparatus 101 includes a control device 110, an inverter main circuit 20, and a motor current detection unit 30.

The inverter apparatus 101 converts the DC voltage Vdc supplied from the DC power supply PS into the 3-phase AC voltage of the U-phase AC voltage, the V-phase AC voltage and the W-phase AC voltage which are load-driving AC voltages for rotationally driving the motor 80.

The motor current detection unit 30 is provided in each wiring of the 3 phases connected to the motor 80 from the inverter apparatus 101. The motor current detection unit 30 detects each of U-phase, V-phase and W-phase currents iu, iv, and iw flowing in the motor 80 in association with the 3-phase AC voltage (AC voltages vu, vv, and vw) output from the inverter apparatus 101 to the motor 80 and reports detection results of the respective currents iu, iv and iw to the control device 110.

### (Inverter main circuit)

In the present embodiment, a positive electrode DC terminal Qa of the inverter main circuit 20 is connected to a positive electrode of the DC power supply PS, and negative electrode DC terminal Qb of the inverter main circuit 20 is connected to a negative electrode of the DC power supply PS.

Further, the PWM-generating unit 22 generates a gate signal for driving the switching element group 21 in association with the selection command received from the control device 110 and turns on and off the switching element group 21.

In the present embodiment, the PWM-generating unit 22 acquires selected AC voltage commands vsu*, vsv*, and vsw* as the selection commands from the control device 110. The PWM-generating unit 22 generates a PWM signal with an on-duty cycle proportional to a voltage at each timing of each waveform of the acquired selected AC voltage commands vsu*, vsv*, and vsw*.

The PWM-generating unit 22 generates a gate signal SG (21UH) and a gate signal SG (21UL) on the basis of the selected AC voltage command vsu*.

Similarly, the PWM-generating unit 22 generates a gate signal SG (21VH) and a gate signal SG (21VL) on the basis of the selected AC voltage command vsv*.

Similarly, the PWM-generating unit 22 generates a gate signal SG (21WH) and a gate signal SG (21WL) on the basis of the selected AC voltage command vsw*.

Other configurations are the same as those in the first embodiment.

### (Control device)

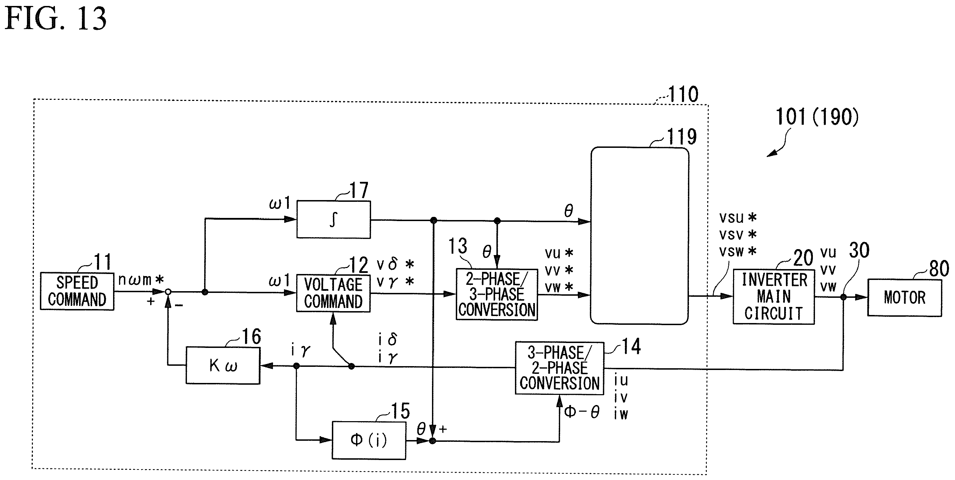

As shown in FIG. 13, the control device 110 functionally includes a speed command unit 11, a voltage command unit 12, a 2-phase/3-phase conversion unit 13, a 3-phase/2-phase conversion unit 14, a power factor angle-setting unit 15, a speed correction unit 16, a phase calculation unit 17, and a selection unit 119.

In the present embodiment, a computer system is caused to function as the control device 110 by executing a program to be described below.

The 2-phase/3-phase conversion unit 13 performs coordinate conversion of the voltage command output from the voltage command unit 12 into AC voltage commands vu*, vv*, and vw* corresponding to each of the 3-phase AC voltages output from the inverter main circuit 20 and then outputs the converted AC voltage commands vu*, vv*, and vw* to the selection unit 119.

The phase calculation unit 17 integrates an inverter output frequency ω1, calculates a phase θ and outputs the phase θ to each of the 2-phase/3-phase conversion unit 13 and the selection unit 119.

### (Selection unit)

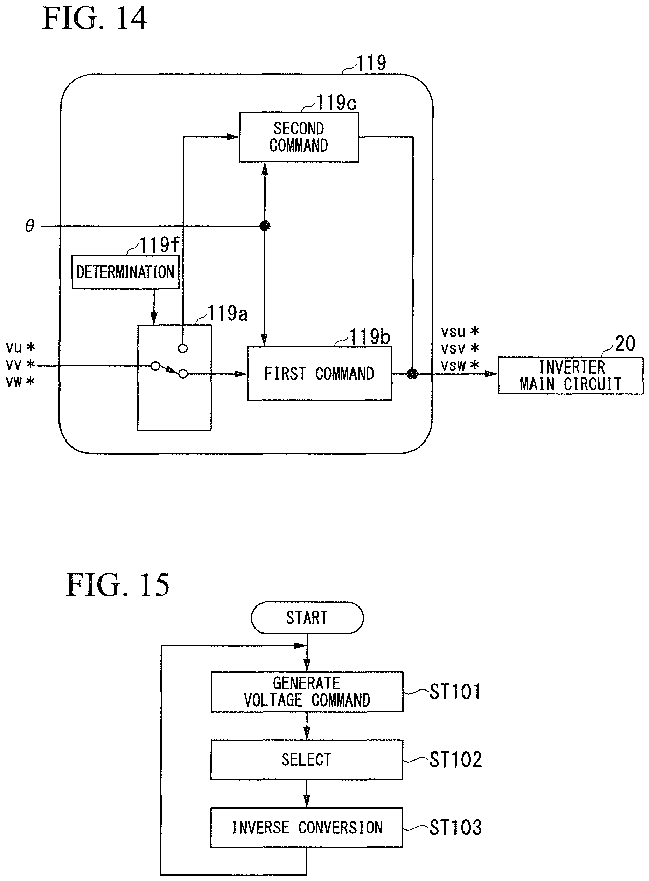

As shown in FIG. 14, the selection unit 119 functionally includes a switching unit 119a, a first command unit 119b, a second command unit 119c, and a determination unit 119f.

The selection unit 119 acquires the AC voltage commands vu*, vv*, and vw* from the 2-phase/3-phase conversion unit 13. The selection unit 119 generates selected AC voltage commands vsu*, vsv*, and vsw* as the selection commands from the acquired AC voltage commands vu*, vv*, and vw*, respectively, and outputs them to the PWM-generating unit 22.

The selected AC voltage commands vsu*, vsv*, and vsw* are converted into PWM signals by the PWM-generating unit 22. Further, the PWM-generating unit 22 generates each gate signal in synchronization with the PWM signals.

In the present embodiment, the selection unit 119 automatically selects and outputs the command to be output as a first command for performing the partial two-phase energization control (control in which the PWM pulse is stopped in the zero voltage region as well as the two-arm type control is performed) or as a second command for performing the two-arm type control (or three-arm type control).

### (Switching unit)

The switching unit 119a can switch whether the acquired AC voltage commands vu*, vv*, and vw* are output to the first command unit 119b or to the second command unit 119c.

The switching unit 119a switches the output to the first command unit 119b and the output to the second command unit 119c according to a command of the determination unit 119f.

### (First command unit)

When the output to the first command unit 119b is selected by the switching unit 119a, the first command unit 119b generates a first command.

The first command unit 119b generates the first command, in which a stop command for stopping the PWM-controlled pulse signal is added to a voltage command generated by the voltage command unit 12, in a mask period which is at least a part of the zero voltage region of the voltage command (AC voltage commands vu*, vv*, and vw*).

The generated first command is output as the selection command to the PWM-generating unit 22.

In the present embodiment, like the correction command unit 18 of the first embodiment, the first command unit 119b corrects the voltage waveforms of the acquired AC voltage commands vu*, vv*, and vw* with reference to the phase θ. That is, the first command unit 119b corrects the voltage waveforms of the acquired AC voltage commands vu*, vv*, and vw* so that the two-arm type control is performed and the PWM pulse is stopped at the zero voltage range of each voltage waveform.

Specifically, the first command unit 119b corrects the voltage waveforms of the AC voltage commands vu*, vv*, and vw* to the respective voltage waveforms of the waveform J2 of FIG. 4 and sets them as the first command. Then, the first command unit 119b outputs the first command as the selected AC voltage commands vsu*, vsv*, and vsw*.

### (Second command unit)

When the switching unit 119a selects the output to the second command unit 119c, the second command unit 119c generates a second command including only the voltage command without including the stop command among the stop command and the voltage command. The generated second command is output to the PWM-generating unit 22 as the selection command.

In the present embodiment, the second command unit 119c corrects the voltage waveforms of the acquired AC voltage commands vu*, vv*, and vw* with reference to the phase θ so that the two-arm type control is performed.

Specifically, the second command unit 119c corrects the voltage waveforms of the AC voltage commands vu*, vv*, and vw* to the respective voltage waveforms of the waveform J1 of FIG. 4 and sets them as the second command. Then, the second command unit 119c outputs the second command as the selected AC voltage commands vsu*, vsv*, and vsw*.

Further, the second command unit 119c may set the respective acquired voltage waveforms of the AC voltage commands vu*, vv*, and vw* as the second command so that the three-arm type control is performed and thus may output the second command as the selected AC voltage commands vsu*, vsv*, and vsw*.

The second command unit 119c can switch whether the voltage waveforms of the waveforms J1 (two-arm type control command) are output or the AC voltage commands vu*, vv*, and vw* (three-arm type control command) are output. Whether the second command is set as a two-arm type control command or a three-arm type control command may be set in advance and may be switched in association with the presence or absence of application of overmodulation control.

### (Determination unit)

The determination unit 119f makes a determination and transmits a command related to the determination result to the switching unit 119a.

The determination unit 119f determines whether or not an inverter output voltage to be output exceeds a limit (according to the DC voltage Vdc and each command).

In the present embodiment, the determination unit 119f determines whether or not the limit of the inverter output voltage in the partial two-phase energization control is exceeded.

Hereinafter, the "inverter output voltage" is an effective voltage of the 3-phase AC voltage output from the "inverter apparatus" to the "motor."

When it is determined that the limit is exceeded, the determination unit 119f transmits a command to the switching unit 119a to switch the output to the second command unit 119c.

When it is determined that the limit is not exceeded, the determination unit 119f transmits a command to the switching unit 119a to switch the output to the first command unit 119b.

In the partial two-phase energization control, whether or not the limit of the inverter output voltage is exceeded is determined, for example, by acquiring the DC voltage Vdc detected by a DC voltage detection circuit 50 shown in FIG. 12.

The determination unit 119f previously stores the inverter output voltage which can be output by the partial two-phase energization control in association with the DC voltage Vdc. Then, the determination unit 119f determines whether the inverter output voltage requested by the desired speed command exceeds the inverter output voltage which can be output with the detected DC voltage Vdc, thereby determining whether or not it exceeds the limit.

As another example, whether or not the limit of the inverter output voltage in the partial two-phase energization control is exceeded may be determined by the PWM pulse signal output from the PWM-generating unit 22. The determination unit 119f acquires the PWM pulse signal from the PWM-generating unit 22 and determines whether or not the limit is exceeded by storing in advance the limit of the PWM pulse signal width in the partial two-phase energization control.

As still another example, the determination unit 119f may make the determination with whether or not various commands such as the speed command and the voltage command exceed the limit in the partial two-phase energization control stored in advance.

### (Method of controlling inverter apparatus)

A method of controlling the inverter apparatus 101 in the present embodiment will be described with reference to FIG. 15.

First, the voltage command unit 12 generates a voltage command using the speed command of the motor 80 (ST101: voltage command generation step).

Subsequently, the selection unit 119 selects one of the first command and the second command as the selection command in the mask period which is a period of at least a part of the zero voltage region of the voltage command and issues the selection command to the inverter main circuit 20 (ST102: selection step).

Subsequently, the inverter main circuit 20, on the basis of the selection command, switches the switching element group 21 according to a generated pulse signal and converts the DC voltage into the 3-phase AC voltage (ST103: inverse conversion step).

Then, as shown in FIG. 15, the process returns to the voltage command generation step ST101 again, and the processes of ST101 to ST103 are repeated in the same way.

When a termination command is input to the inverter apparatus 101 by the user, the repeated processes of ST101 to ST103 are terminated.

### (Action and effect)

In addition to the action and effect of the first embodiment, the inverter apparatus 101 of the present embodiment can further increase the inverter output voltage by switching to the two-arm control (or three-arm control) when reaching the limit of the inverter output voltage during the partial two-phase energization control.

Specifically, it is as follows.

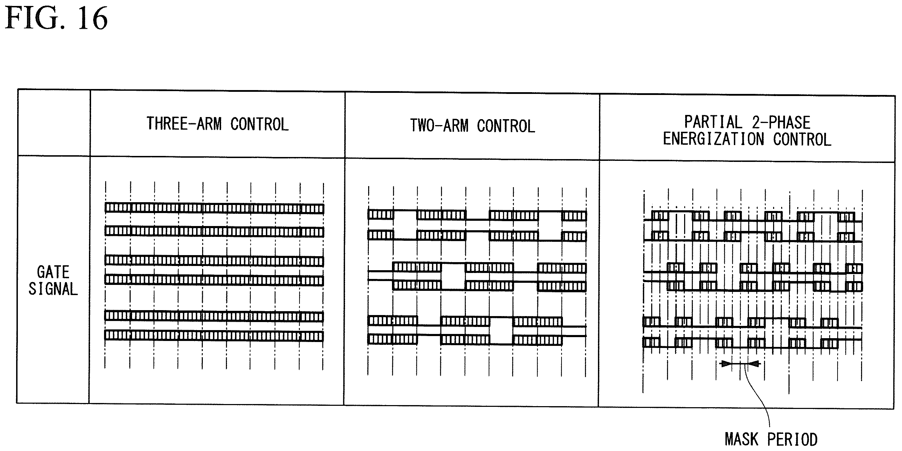

FIG. 16 schematically shows each gate signal generated by each of the three-arm control, the two-arm control and the partial two-phase energization control. The features of each control are as follows:

In the three-arm control, the PWM control is performed on the switching element of the upper arm and the switching element of the lower arm (the upper and lower arms) over the entire period in all three phases.

In contrast to the three-arm control, to reduce the switching loss, the two-arm control has a period in which one of the upper and lower arms of one of the three phases is fixed in an ON state, and the PWM control is performed only on the upper and lower arms of the remaining two phases.

In contrast to the two-arm control, the partial two-phase energization control has the mask period to further reduce the switching loss. However, since the mask period is provided, the inverter output voltage which can be output is lowered as compared to three-arm control and two-arm control. Therefore, flux-weakening control at low rotation is required, and the loss increases as compared to three-arm control and two-arm control.

Normally, the inverter apparatus cannot output the inverter output voltage which is equal to or higher than DC voltage Vdc. Accordingly, in the V/f control in which the inverter output voltage and the rotation speed are proportional to each other, when the limit of the inverter output voltage is reached, the rotation speed cannot be further increased.

However, when the three-arm control is performed, the inverter output voltage can be increased slightly by performing the "overmodulation control" in which the waveform of the 3-phase AC voltage approaches a rectangular wave when the limit of the inverter output voltage is reached.

In any case, when the limit of the inverter output voltage is reached, in order to raise the rotation speed, it is necessary to perform the "flux-weakening control" which increases a d-axis current and decreases a magnetic flux in a d-axis direction.

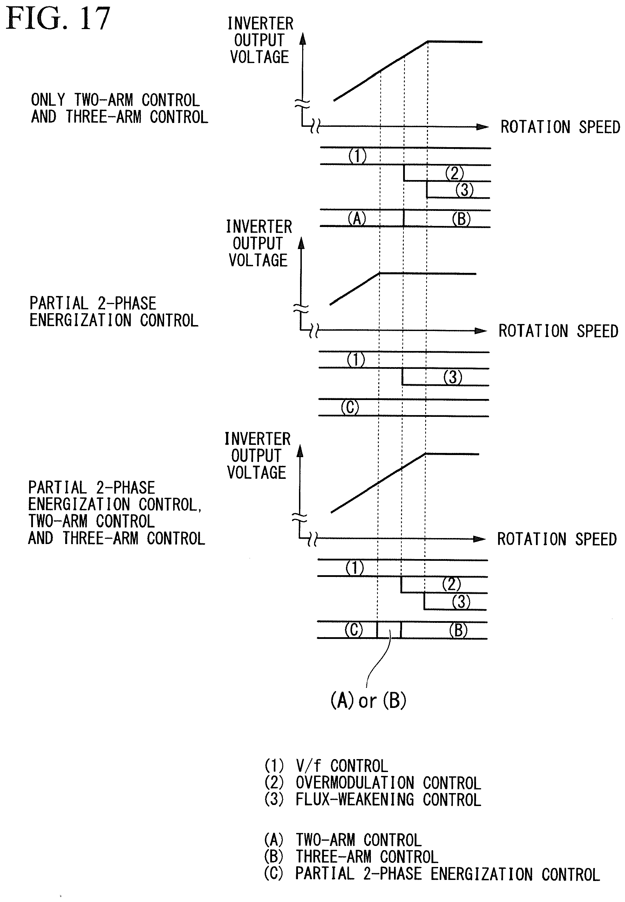

In FIG. 17, an example in which the two-arm control and the three-arm control are performed, an example in which the partial two-phase energization control is performed, and an example in which the partial two-phase energization control, the two-arm control, and the three-arm control are combined are respectively shown in an upper part, a middle part and a lower part thereof to be compared with each other.

In each graph of FIG. 17, a horizontal axis represents the rotation speed and a vertical axis represents the inverter output voltage. FIG. 17 shows a range in which each of (1) the V/f control, (2) the overmodulation control and (3) the flux-weakening control is applied in association with the rotation speed and inverter output voltage as an example. Further, FIG. 17 shows a range in which each of (A) the two-arm control, (B) the three-arm control, and (C) the partial two-phase energization control is applied in association with the rotation speed and the inverter output voltage.

As shown in FIG. 17, compared to the example in which the two-arm control and the three-arm control are performed, in the example in which the partial two-phase energization control is performed, the inverter output voltage which can be output at a low rotation speed reaches the limit.

As described above, in the partial two-phase energization control, the inverter output voltage which can be output is smaller than that in the two-arm control or the three-arm control. Therefore, it is necessary to apply the flux-weakening control at low rotation speed, and the loss increases as compared to the two-arm control and the three-arm control. As a result, efficiency of the partial two-phase energization control is deteriorated as compared to the two-arm control or the three-arm control.

On the other hand, since the inverter apparatus 101 of the present embodiment combines the partial two-phase energization control, the two-arm control, and the three-arm control, the limit of the inverter output can be set to the same level as in the example in which the two-arm control and the three-arm control are performed, as shown in FIG. 17. Accordingly, the inverter apparatus 101 can reduce an application range of the flux-weakening control.

Therefore, the inverter apparatus 101 can suppress an increase in loss and can improve inverter efficiency.

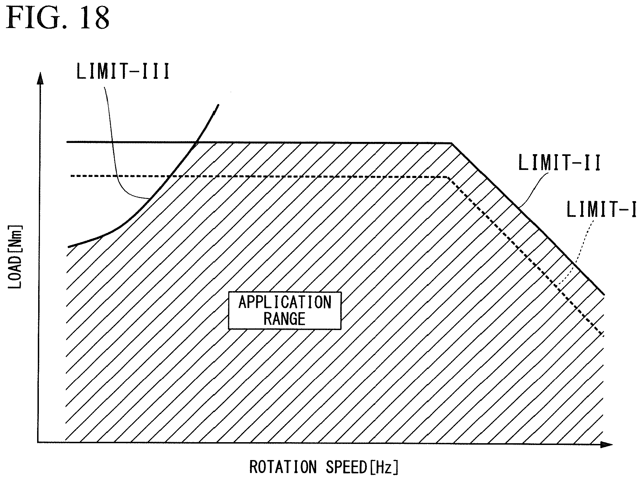

Further, as shown in FIG. 18, the partial two-phase energization control is limited to a range having an upper limit of LIMIT-I. On the other hand, in the present embodiment, the limit of the current which can flow to the motor 80 is widened to an application range (hatched range) having an upper limit of LIMIT-II by the switching to the two-arm control or the three-arm control in a range exceeding LIMIT-I. In a graph of FIG. 18, a horizontal axis represents the rotation speed [Hz], and a vertical axis represents the load [Nm] which is applicable to the motor 80. LIMIT - III is a limitation due to an input current.

When the desired rotation speed is changed and shifted to the range which is also applicable to the partial two-phase energization control, the inverter apparatus 101 may be returned from the two-arm control or the three-arm control to the partial two-phase energization control by the switching to the first command.

### <Fourth embodiment>

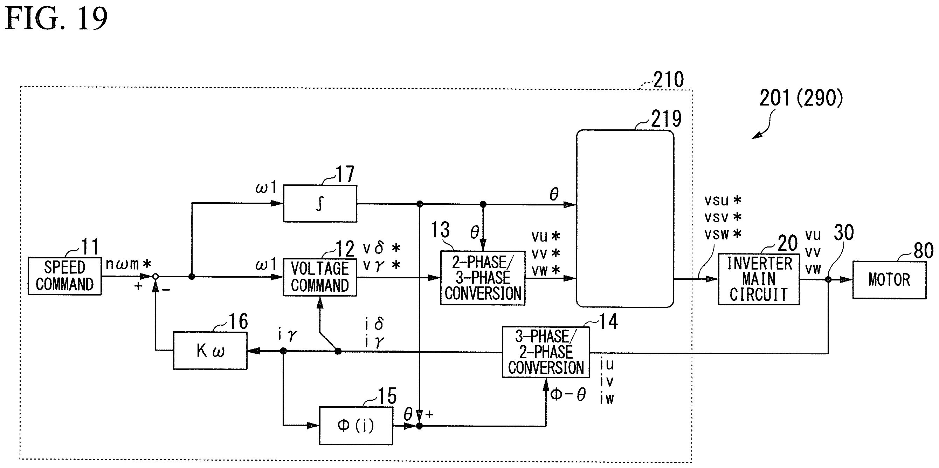

Hereinafter, an inverter apparatus according to a fourth embodiment will be described in detail with reference to FIGS. 19 to 21.

The inverter apparatus according to the present embodiment is basically the same as that of the third embodiment, except that, instead of the control for switching the partial two-phase energization control to the two-arm control or the three-arm control, control for reducing the mask period in the partial two-phase energization control is performed.

An inverter apparatus 201 is installed in an outdoor unit of an air conditioner (air conditioning unit) 290.

As shown in FIG. 19, the inverter apparatus 201 includes a control device 210 having a selection unit 219, an inverter main circuit 20, and a motor current detection unit 30.

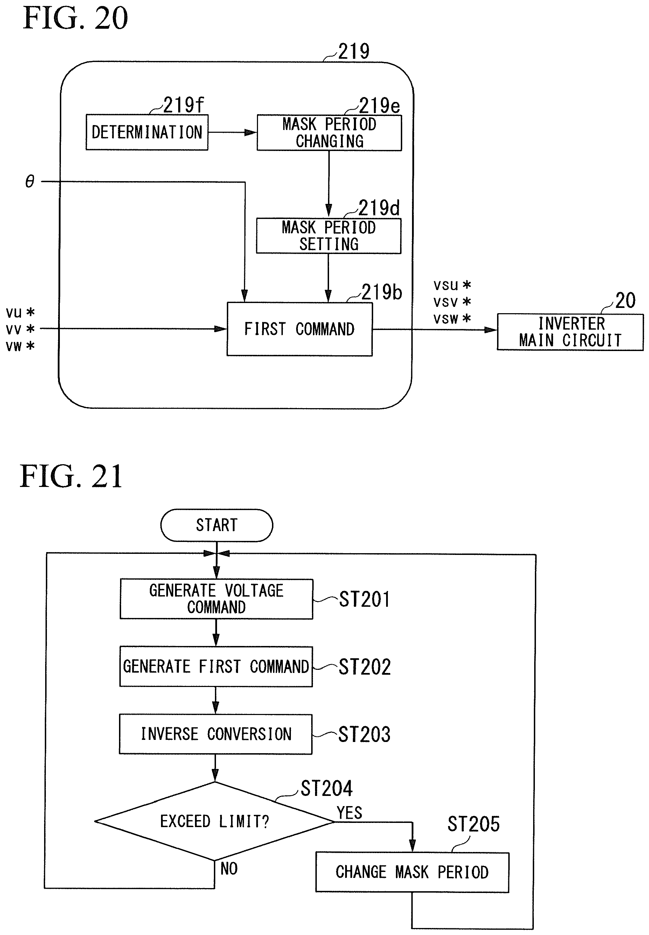

As shown in FIG. 20, the selection unit 219 functionally includes a first command unit 219b, a mask period-setting unit 219d, a mask period-changing unit 219e, and a determination unit 219f.

### (Mask period-setting unit)

The mask period-setting unit 219d sets a mask period and outputs the set mask period to the first command unit 219b.

### (Mask period-changing unit)

The mask period-changing unit 219e changes the mask period set in the mask period-setting unit 219d according to a command of the determination unit 219f.

### (Determination unit)

The determination unit 219f makes a determination and outputs a command related to the determination result to the mask period-changing unit 219e.

In the present embodiment, the determination unit 219f determines whether or not the inverter output voltage to be output exceeds the limit of the inverter output voltage in the partial two-phase energization control.

If it is determined that the limit is exceeded, the determination unit 219f transmits a command to the mask period-changing unit 219e to reduce the mask period.

### (First command unit)

The first command unit 219b generates a first command in which a stop command for stopping the PWM-controlled pulse signal is added to a voltage command generated by the voltage command unit 12 in the mask period which is at least a part of the zero voltage region of the voltage command (AC voltage commands vu*, vv*, and vw*). The generated first command is output as a selection command to the PWM-generating unit 22.

In the present embodiment, like the correction command unit 18 of the first embodiment, the first command unit 219b corrects the voltage waveforms of the acquired AC voltage commands vu*, vv*, and vw* with reference to the phase θ. That is, the first command unit 219b corrects the voltage waveforms of the acquired AC voltage commands vu*, vv*, and vw* so that the two-arm type control is performed and the PWM pulse is stopped in the zero voltage range of each of the voltage waveforms.

Specifically, the first command unit 219b corrects the voltage waveforms of the AC voltage commands vu*, vv*, and vw* to the respective voltage waveforms of the waveforms J2 of FIG. 4 and sets them as a first command. Then, the first command unit 219b outputs the first command as the selected AC voltage commands vsu*, vsv*, and vsw*.

The first command unit 219b acquires the mask period output from the mask period-setting unit 219d. The first command unit 219b generates the first command in which the stop command for stopping the PWM control pulse signal is added to the voltage command generated by the voltage command unit 12 in the mask period acquired from the mask period-setting unit 219d.

### (Method of controlling inverter apparatus)

A method of controlling the inverter apparatus 201 in the present embodiment will be described with reference to FIG. 21.

First, the voltage command unit 12 generates a voltage command using the speed command of the motor 80 (ST201: voltage command generation step).

Subsequently, the first command unit 219b generates the first command (in which the stop command for stopping the PWM-controlled pulse signal is added to the voltage command generated by the voltage command unit 12 in the mask period which is at least a part of the zero voltage region of the voltage command) (ST202: first command generation step).

Subsequently, the inverter main circuit 20, on the basis of the first command, switches the switching element group 21 according to a generated pulse signal and converts the DC voltage into the 3-phase AC voltage (ST203: inverse conversion step).

Subsequently, the determination unit 219f determines whether or not the inverter output voltage to be output exceeds the limit of the inverter output voltage in the partial two-phase energization control (ST204: determination step).

When it is determined that the limit is not exceeded (ST204: NO), the process directly returns to the voltage command generation step ST201, and the processes of ST201 to ST204 are repeated in the same way.

When it is determined that the limit is exceeded (ST204: YES), the mask period-changing unit 219e changes the mask period so that the mask period becomes shorter (ST205: mask period-changing step) and then returns to the voltage command generation step ST201 again as shown in FIG. 21.

### (Action and effect)

In addition to the action and effect of the first embodiment, the inverter apparatus 201 can raise the inverter output voltage in the partial two-phase energization control, by reducing the mask period.

Accordingly, the inverter apparatus 201 can reduce the application range of the flux-weakening control. Therefore, the inverter apparatus 201 can suppress an increase in loss and can improve inverter efficiency.

As a modified example of the present embodiment, when the determination unit 219f determines that the limit is not exceeded, the determination unit 219f may transmit a command to the mask period-changing unit 219e to increase the mask period.

### <Fifth embodiment>

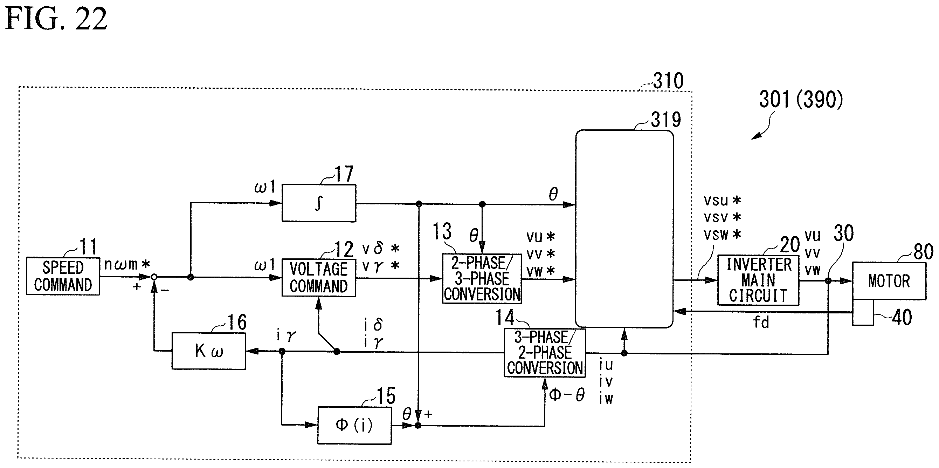

Hereinafter, an inverter apparatus according to a fifth embodiment will be described in detail with reference to FIGS. 22 to 24.

The inverter apparatus according to the present embodiment is basically the same as that of the third embodiment, except that the partial two-phase energization control is switched to the two-arm control or the three-arm control even when there is a possibility of step-out as well as when the inverter output voltage reaches the limit.

FIG. 22 is a diagram showing a circuit configuration of an inverter apparatus 301 according to the present embodiment.

The inverter apparatus 301 is installed in an outdoor unit of an air conditioner (air conditioning unit) 390.

The inverter apparatus 301 includes a control device 310 having a selection unit 319, an inverter main circuit 20, a motor current detection unit 30, and a motor rotation speed detection unit 40.

The motor rotation speed detection unit 40 detects a rotation speed fd of the motor 80 and notifies the control device 310 of it.

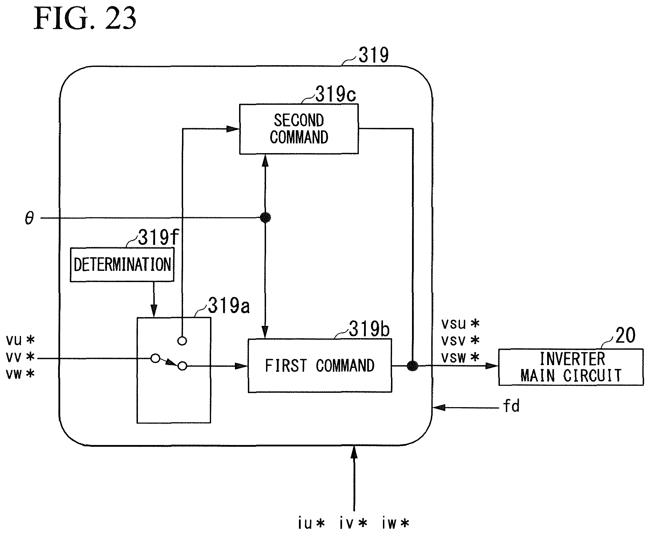

As shown in FIG. 23, the selection unit 319 functionally includes a switching unit 319a, a first command unit 319b, a second command unit 319c, and a determination unit 319f.

Like the switching unit 119a of the third embodiment, the switching unit 319a can switch between an output to the first command unit 319b and an output to the second command unit 319c.

The switching unit 319a switches between the output to the first command unit 319b and the output to the second command unit 319c according to a command of the determination unit 319f.

The determination unit 319f makes a determination and transmits a command related to the determination result to the switching unit 319a.

In the present embodiment, the determination unit 319f of the inverter apparatus 301 determines whether or not there is a possibility of step-out when the partial two-phase energization control is performed. When it is determined that there is a possibility of step-out, the determination unit 319f transmits a command to the switching unit 319a to switch the output to the second command unit 319c and switches the control type to the two-arm control or the three-arm control.

Specifically, the determination unit 319f performs the following determination.

The determination unit 319f stores in advance a relationship between a rotation speed of the motor 80 having the possibility of step-out and a current value flowing in the motor 80.

In the motor 80, step-out occurs at a low rotation speed and a high load. On the other hand, when a load on the motor 80 is increased, the value of the current flowing in the motor 80 increases. Therefore, when the relationship between the rotation speed of the motor 80 and the current value flowing in the motor 80 is stored, the determination unit 319f can determine a condition having the possibility of step-out.

The relationship between the rotation speed and the current value, which is stored in advance and has the possibility of step-out, may be, for example, a map showing the relationship between the rotation speed and the current value, or may be a mathematical expression.

In the present embodiment, when it is determined that the detected rotation speed fd of the motor 80 and each of the currents iu, iv, and iw are the rotation speed and the current value within a range having the possibility of step-out, the switching unit 319a switches the output to the first command unit 319b to the output to the second command unit 319c.

### (Action and effect)

For the current flowing in the motor 80 during the two-arm control (refer to FIG. 7), the current (refer to FIG. 6) flowing in the motor 80 during the partial two-phase energization control has a waveform approximate to a rectangular wave. Therefore, in the low rotation and high load region, torque is insufficient, and the possibility of step-out in the motor 80 increases. This is also applied to the three-arm control.

Therefore, in the present embodiment, in the low rotation and high load region, the partial two-phase energization control is not performed, and it is automatically switched to the two-arm control or the three-arm control.

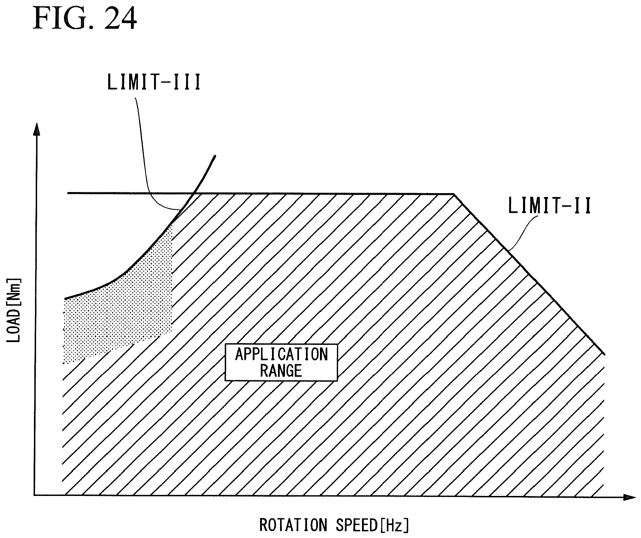

As shown in FIG. 24, in the partial two-phase energization control, there is the possibility of step-out in the low rotation and high load range (dotted range). On the other hand, since it is automatically switched to the two-arm control or the three-arm control, a range including the low rotation and high load range (hatched range including the dotted range) can be set as the application range, and step-out is suppressed.

As a modified example, the present embodiment and the fourth embodiment may be combined.

Specifically, the mask period of the partial two-phase energization control may be reduced even when there is the possibility of step-out as well as when the inverter output voltage is at the limit. In the inverter apparatus 301, when the mask period is reduced, the current flowing in the motor 80 has a waveform approximate to the waveform in the two-arm control or the three-arm control, and thus step-out is suppressed.

### <Sixth embodiment>

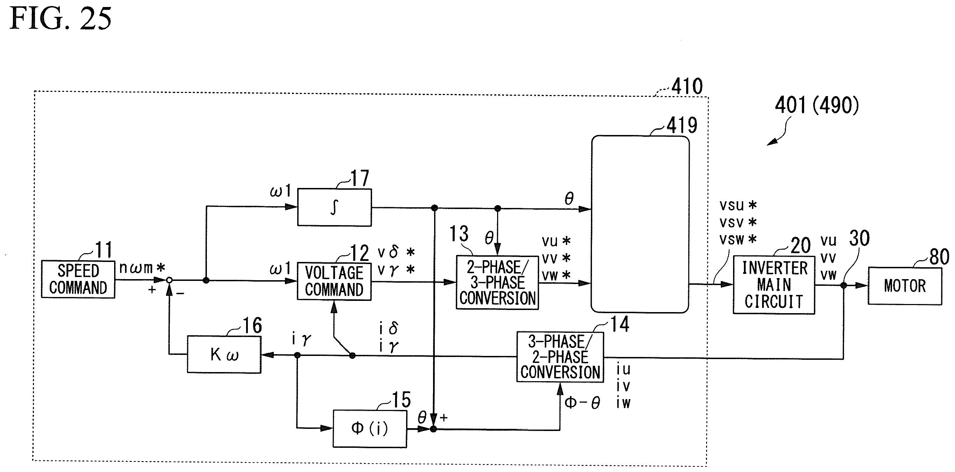

Hereinafter, an inverter apparatus according to a sixth embodiment will be described in detail with reference to FIGS. 25 to 29.

The inverter apparatus according to the present embodiment is basically the same as that of the first embodiment, except that the mask period is changed before and after the switching between partial two-phase energization control and the two-arm control.

### (Circuit configuration of inverter apparatus)

FIG. 25 is a diagram showing a circuit configuration of an inverter apparatus 401 according to the present embodiment.

The inverter apparatus 401 is mounted in an outdoor unit of an air conditioner (air conditioning unit) 490.

The inverter apparatus 401 includes a control device 410 having a selection unit 419, an inverter main circuit 20, and a motor current detection unit 30.

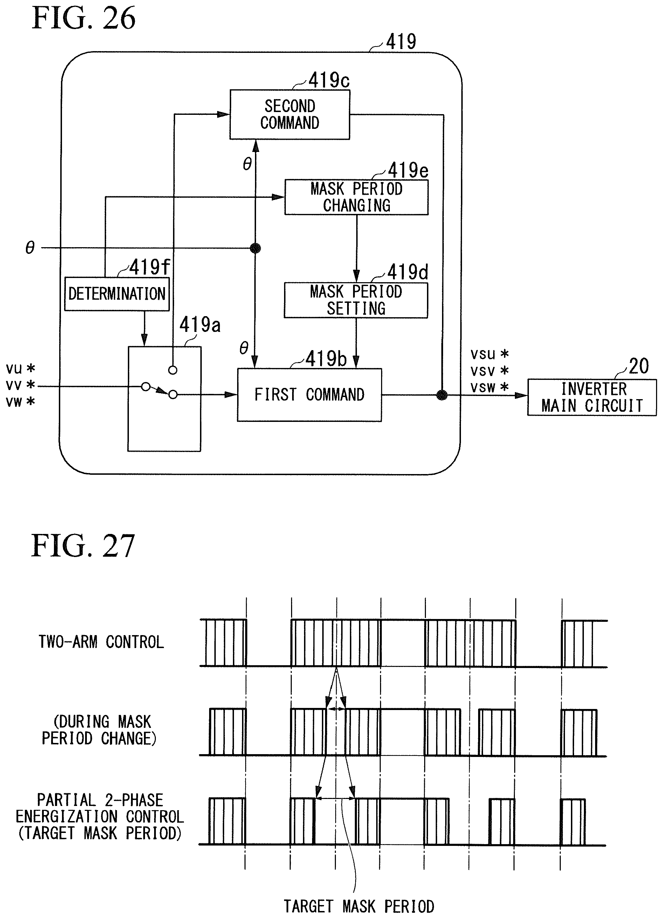

As shown in FIG. 26, the selection unit 419 functionally includes a switching unit 419a, a first command unit 419b, a second command unit 419c, a mask period-setting unit 419d, a mask period-changing unit 419e, and a determination unit 419f.

Like the switching unit 119a of the third embodiment, the switching unit 419a switches between the output to the first command unit 419b and the output to the second command unit 419c according to a command of the determination unit 419f.

The determination unit 419f makes a determination and sends a command related to the determination result to the switching unit 419a.

The determination unit 419f determines whether or not the inverter output voltage to be output (according to the direct current voltage Vdc and each command) exceeds the limit.

In the present embodiment, the determination unit 419f determines whether or not the limit of the inverter output voltage in the partial two-phase energization control is exceeded.

When it is determined that the limit is exceeded, the determination unit 419f transmits a command to the switching unit 419a to switch the output to the second command unit 419c.

When it is determined that the limit is not exceeded, the determination unit 419f transmits a command to the switching unit 419a to switch the output to the first command unit 419b.

In the present embodiment, the inverter apparatus 401 changes the mask period before and after switching between the partial two-phase energization control and the two-arm control.

For example, the switching from the two-arm control to the partial two-phase energization control performs the following control.

The switching unit 419a switches the output to the second command unit 419c to the output to the first command unit 419b, and then the mask period-changing unit 419e gradually increases the mask period set in the mask period-setting unit 419d toward a mask period to be set. The mask period-changing unit 419e gradually increases the mask period set in the mask period-setting unit 419d toward the mask period to be set while performing conversion (inverse conversion) from the DC voltage Vdc in the inverter main circuit 20 to the 3-phase AC voltage.

The control device 410 shifts the control type to the partial two-phase energization control having a target mask period which is the mask period to be set while greatly changing the mask period gradually from the two-arm control. FIG. 27 shows a change in the gate signal for driving the switching element group 21 when it is shifted from the two-arm control to the partial two-phase energization control having the target mask period.

The control device 410 gradually changes the mask period in stages by the mask period-changing unit 419e.

For example, when it is controlled at 10 bits (1024) with respect to the inverter cycle of 360°, it can be changed with a resolution of 0.35°.

Specifically, in each stage of gradually changing the mask period, the mask period is increased by adding one resolution (2×0.35°=0.7° in one control period) to both sides of the mask period.

The switching from the partial two-phase energization control to the two-arm control performs reverse control.

That is, before the switching unit 419a switches the output to the first command unit 419b to the output to the second command unit 419c, the mask period-changing unit 419e gradually decreases the mask period set in the mask period-setting unit 419d. After that, the switching unit 419a switches the output to the first command unit 419b to the output to the second command unit 419c.

### (Method of controlling inverter apparatus)

A method of controlling the inverter apparatuses 401 in the present embodiment will be described

### (Switching from two-arm control to partial two phase energization control)

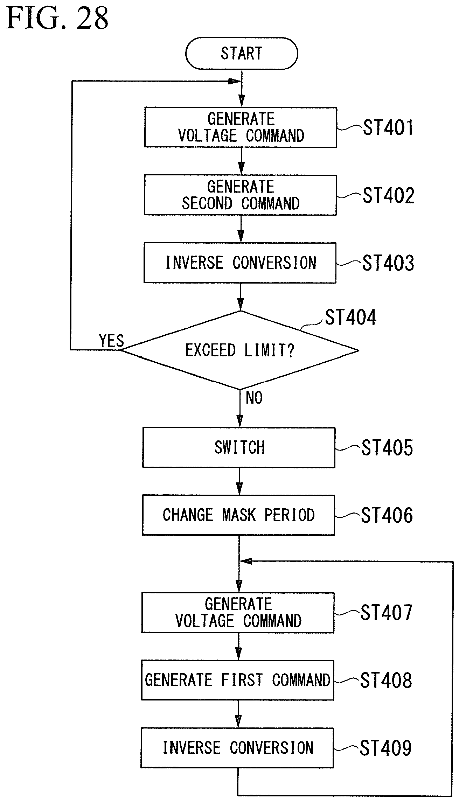

The switching from the two-arm control to the partial two-phase energization control will be described with reference to FIG. 28.

First, the voltage command unit 12 generates a voltage command using the speed command of the motor 80 (ST401: voltage command generation step).

Subsequently, the second command unit 419c generates a second command (including a voltage command without including a stop command for stopping the PWM-controlled pulse signal) during the mask period (ST402: second command generation step). In the second command generation step ST402 of the present embodiment, a command for performing the two-arm control is generated as the second command.

Subsequently, the inverter main circuit 20, on the basis of the second command, switches the switching element group 21 according to a generated pulse signal and converts the DC voltage into the 3-phase AC voltage (ST403: inverse conversion step).

Subsequently, the determination unit 419f determines whether or not the inverter output voltage to be output exceeds the limit of the inverter output voltage in the partial two-phase energization control (ST404: determination step).

When it is determined that the limit is exceeded (ST404: YES), the process returns to the voltage command generation step ST401.

When it is determined that the limit is not exceeded (ST404: NO), the switching unit 419a switches the output to the second command unit 419c to the output to the first command unit 419b (ST405: switching step).

Subsequently, the inverter apparatus 401 gradually increases the mask period to the target mask period, as shown in FIG. 27, while performing inverse conversion by a command from the first command unit 419b (ST406: mask period-changing step).

Subsequently, the voltage command unit 12 generates the voltage command using the speed command of the motor 80 (ST407: voltage command generation step).

Subsequently, the first command unit 419b generates the first command (in which the stop command for stopping the PWM-controlled pulse signal is added to the voltage command generated by the voltage command unit 12) in the target mask period (ST408: first command generation step). In the first command generation step ST408 of the present embodiment, a command for performing the partial two-phase energization control having the target mask period is generated as the first command.

Subsequently, the inverter main circuit 20 converts the DC voltage into the 3-phase AC voltage on the basis of the first command (ST409: inverse conversion step).

Then, as shown in FIG. 28, the process returns to the voltage command generation step ST407 again, and the processes of ST407 to ST409 are repeated in the same way.

### (Switching from partial two-phase energization control to two-arm control)

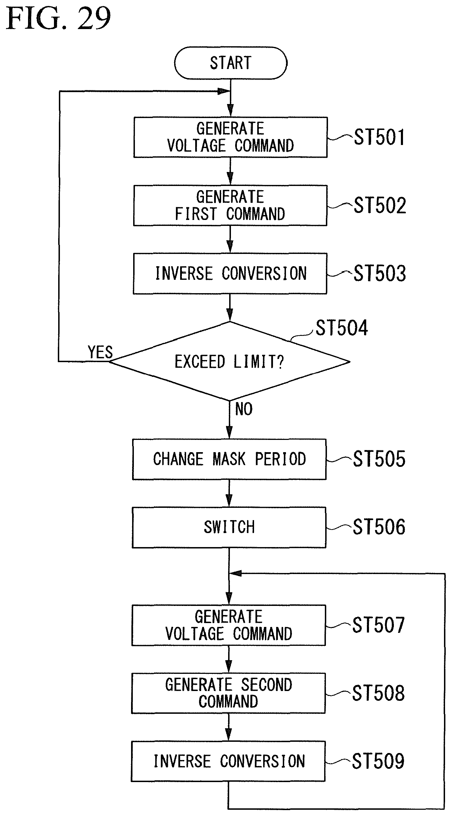

In the switching from the partial two-phase energization control to the two-arm control, reverse processing of the switching from the two-arm control to the partial two-phase energization control is performed. Points different from the processing of FIG. 28 will be described with reference to FIG. 29.

First, the voltage command unit 12 generates a voltage command using the speed command of the motor 80 (ST501: voltage command generation step).

Subsequently, the first command unit 419b generates the first command (ST502: first command-generating step). At this time, the switching unit 419a selects the output to the first command unit 419b. In the first command generation step ST502 of the present embodiment, a command for performing the partial two-phase energization control is generated as the first command.

Subsequently, the inverter main circuit 20, on the basis of the first command, switches the switching element group 21 according to a generated pulse signal and converts the DC voltage into the 3-phase AC voltage (ST503: inverse conversion step).

Subsequently, the determination unit 419f determines whether the inverter output voltage is large or small (ST504: determination step). In the present embodiment, it is determined whether or not the inverter output voltage to be output exceeds the limit of the inverter output voltage in the partial two-phase energization control.

When it is determined that the limit is not exceeded (ST504: NO), the process returns to the voltage command generation step ST501.

When it is determined that the limit is exceeded (ST504: YES), the inverter apparatus 401 gradually decreases the mask period while performing inverse conversion by the command from the first command unit 419b (ST505: mask period-changing step).

Subsequently, the switching unit 419a switches the output to the first command unit 419b to the output to the second command unit 419c (ST506: switching step).

Subsequently, the voltage command unit 12 generates the voltage command using the speed command of the motor 80 (ST507: voltage command generation step).

Subsequently, the second command unit 419c generates the second command (ST508: second command-generating step).

Subsequently, the inverter main circuit 20 converts the DC voltage to the 3-phase AC voltage on the basis of the second command (ST509: inverse conversion step).

Then, as shown in FIG. 29, the process returns to the voltage command generation step ST507 again, and the processes of ST507 to ST509 are repeated in the same way.

### (Action and effect)

When the switching between the partial two-phase energization control and the two-arm control is performed abruptly, vibration may occur, and thus sound noise may be generated.

On the other hand, the inverter apparatus 401 of the present embodiment can switch between the two-arm control and the partial two-phase energization control having a desired mask period (target mask time) while changing the mask period. Accordingly, the vibration is suppressed in the switching between the partial two-phase energization control and the two-arm control.

### <Modified example>

In each of the embodiments, the AC voltage commands vu*, vv*, and vw*, as the corrected AC voltage commands vvu*, vvv*, and vvw* (or selected AC voltage commands vsu*, vsv*, and vsw*), are respectively corrected to the waveforms J2 having the mask period during which the voltage is set to 0 in the entire zero voltage region RGZ.

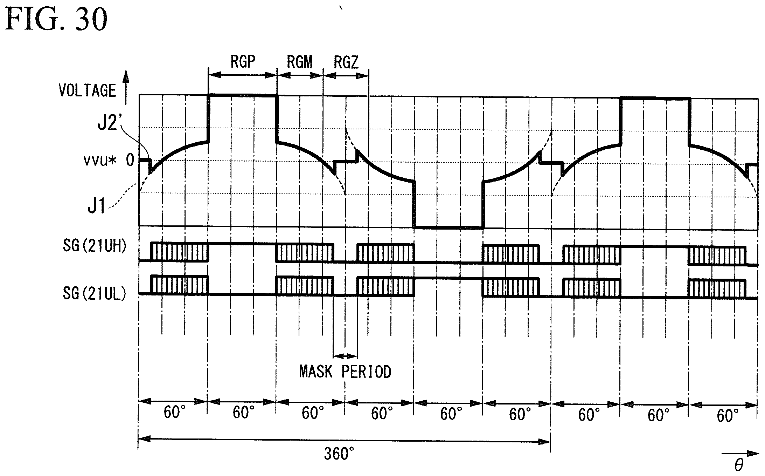

As a modified example, as shown in FIG. 30, each of the AC voltage commands vu*, vv*, and vw* may be corrected to a waveform J2' having the mask period during which the voltage is set to 0 in a part of the zero voltage region RGZ. In this case, the correction may be performed so that the mask period includes at least two peaks of ringing, or may be performed so that the mask period includes at least a part of a period of the zero voltage region RGZ.

FIG. 30 shows only an example in which the corrected AC voltage command vvu* (or selected AC voltage command vsu*) is corrected to the waveform J2'. However, each of the corrected AC voltage commands vvv* and vvw* (or selected AC voltage commands vsv* and vsw*) may also be corrected to the waveform J2' in the same manner.

Further, although the mask period of the waveform J2' is an electrical angle of 30° and is set at a center of the zero voltage region RGZ, the mask period may be set to any electrical angle and position.

In each of the embodiments, the voltages of the corrected AC voltage commands vvu*, vvv*, and vvw* (or selected AC voltage commands vsu*, vsv*, and vsw*) are corrected to 0 in the mask period. However, as a modified example, each of the voltages may be corrected to a positive voltage smaller than the voltage of the minimum value of the voltage waveform of the triangular wave.

In each of the embodiments, an IGBT is used as the switching element, but as a modified example, an SJ-MOSFET may be used as the switching element.

In the present embodiments, a silicon semiconductor-switching element is used, but as a modified example, a switching element of a wide gap semiconductor such as SiC or GaN may be used.

In each of the embodiments, as the PWM control, the control of turning on both the switching element of the upper arm and the switching element of the lower arm over the entire region of the plurality of cycles of the PWM cycle among regions in which each phase voltage of the 3-phase AC voltage is large is performed, as two-arm type control.

As a modified example, at least one of the switching element of the upper arm and the switching element of the lower arm may be turned on. As another modified example, a correction command which merely stops the pulse signal in the zero voltage region without performing the two-arm type control may be generated.

The control device of each of the third to sixth embodiments transmits the voltage waveform of the waveform J2 to the PWM-generating unit 22 as the first command but may separately transmit the corrected AC voltage command and the stop signal for stopping the pulse as the first command, like the second embodiment.

As a modified example of each of the third to sixth embodiments, in the inverter apparatus of each embodiment, the DC power supply PS may be a variable power supply capable of varying the DC voltage Vdc, and the control device may control the DC voltage Vdc, and thus pulse-amplitude modulation (PAM) control may be used in combination in the partial two-phase energization control. When the PAM control is used in combination, the inverter output voltage which can be output increases, and thus an operating range of the inverter can be further widened.

In each of the above-described embodiments, a program for realizing various functions of the control device is recorded in a computer-readable recording medium, and a program recorded in the recording medium is read by a computer system such as a microcomputer and is executed, thereby performing various processes. Here, the procedure of various processes of the CPU of the computer system is stored in a computer-readable recording medium in the form of a program, and the computer reads and executes this program, thereby performing the above various processes. Further, the computer-readable recording medium refers to a magnetic disk, a magneto-optical disk, a CD-ROM, a DVD-ROM, a semiconductor memory, or the like. Further, the computer program may be distributed to a computer via a communication line, and the computer receiving the distribution may execute the program.

While several embodiments of the invention have been described, these embodiments are presented by way of example and are not intended to limit the scope of the invention. These embodiments can be implemented in various other forms, and various omissions, substitutions, and changes can be made within the scope that does not depart from the gist of the invention. These embodiments or modified examples thereof are included in the invention described in the claims and the equivalent scope thereof as well as being included in the scope and gist of the invention.

### [Industrial Applicability]

According to an embodiment described above, it is possible to reduce the delay of the PWM signal stop and to suppress the decrease in the inverter output voltage.

### EXPLANATION OF REFERENCES

1 Inverter apparatus
1' Inverter apparatus
10 Control device
10' Control device
11 Speed command unit
12 Voltage command unit
13 2-phase/3-phase conversion unit
14 3-phase/2-phase conversion unit
15 Power factor angle-setting unit
16 Speed correction unit
17 Phase calculation unit
18 Correction command unit
18' Correction command unit
20 Inverter main circuit
20' Inverter main circuit
21 Switching element group
21 UH Switching element
21 UL Switching element
21 VH Switching element
21 VL Switching element
21 WH Switching element
21 WL Switching element
22 PWM-generating unit
23 Pulse stop unit
30 Motor current detection unit
40 Motor rotation speed detection unit
50 DC voltage detection circuit
80 Motor (3-phase motor)
90 Air conditioner (air conditioning unit)
90' Air conditioner (air conditioning unit)
101 Inverter apparatus
110 Control device
119 Selection unit
119a Switching unit
119b First command unit
119c Second command unit
119f Determination unit
190 Air conditioner (air conditioning unit)
201 Inverter apparatus
210 Control device
219 Selection unit
219b First command unit
219d Mask period-setting unit
219e Mask period-changing unit
219f Determination unit
290 Air conditioner (air conditioning unit)
301 Inverter apparatus
310 Control device
319 Selection unit
319a Switching unit
319b First command unit
319c Second command unit
319f Determination unit
360 Inverter cycle
390 Air conditioner (air conditioning unit)
401 Inverter apparatus
410 Control device
419 Selection unit
419a Switching unit
419b First command unit
419c Second command unit
419d Mask period-setting unit
419e Mask period-changing unit
419f Determination unit
490 Air conditioner (air conditioning unit)
PS DC power supply
Qa Positive electrode DC terminal
Qb Negative electrode DC terminal

## Claims

1. An inverter apparatus capable of driving a 3-phase motor by V/f control, comprising:
an inverter main circuit including a switching element group and configured to convert a DC voltage into a 3-phase AC voltage;
a voltage command unit configured to generate a voltage command on the basis of a speed command of the 3-phase motor; and
a selection unit configured to select one of a first command in which a stop command for stopping a PWM-controlled pulse signal is added to the voltage command in a mask period which is at least a part of a zero voltage range of the voltage command and a second command including the voltage command without including the stop command, as a selection command, and to issue the selection command to the inverter main circuit,
wherein control to switch the switching element group is performed on the basis of the selection command.

2. The inverter apparatus according to Claim 1, wherein the switching element group includes a pair of switching elements of an upper arm and a lower arm in association with each phase of the 3-phase AC voltage, and
when at least the first command is selected, control of turning on at least one of the switching element of the upper arm and the switching element of the lower arm over an entire region of a plurality of cycles of a PWM cycle among regions in which each phase voltage of the 3-phase AC voltage is large is performed.

3. The inverter apparatus according to Claim 1 or 2, wherein the selection unit issues the selection command in association with a current value output to the 3-phase motor and a rotation speed of the 3-phase motor.

4. The inverter apparatus according to any one of Claims 1 to 3, further comprising:
a mask period-changing unit configured to change the mask period.

5. The inverter apparatus according to Claim 4, wherein the mask period-changing unit increases the mask period after the second command is switched to the first command.

6. The inverter apparatus according to Claim 4 or 5, wherein the mask period-changing unit decreases the mask period before the first command is switched to the second command.

7. An air conditioner comprising:
the inverter apparatus according to any one of Claims 1 to 6; and
the 3-phase motor.

8. A method of controlling an inverter apparatus which comprises an inverter main circuit including a switching element group and configured to convert a DC voltage to a 3-phase AC voltage and is capable of driving a 3-phase motor by V/f control, the method comprising:
a voltage command generation step of generating a voltage command on the basis of a speed command of the 3-phase motor;
a selection step of selecting one of a first command in which a stop command for stopping a PWM-controlled pulse signal is added to the voltage command in a mask period which is at least a part of a zero voltage range of the voltage command and a second command including the voltage command without including the stop command, as a selection command, and issuing the selection command to the inverter main circuit; and
an inverse conversion step of switching the switching element group on the basis of the selection command and converting the DC voltage into the 3-phase AC voltage.

9. A program which causes a computer of an inverter apparatus comprising an inverter main circuit including a switching element group and configured to convert a DC voltage into a 3-phase AC voltage, capable of driving a 3-phase motor by V/f control and configured to perform control to switch the switching element group on the basis of a selection command, to function as
a voltage command unit configured to generate a voltage command on the basis of a speed command of the 3-phase motor; and
a selection unit configured to select one of a first command in which a stop command for stopping a PWM-controlled pulse signal is added to the voltage command in a mask period which is at least a part of a zero voltage range of the voltage command and a second command including the voltage command without including the stop command, as the selection command, and to issue the selection command to the inverter main circuit.
